# EUROPEAN PATENT SPECIFICATION

(11) **EP 3 330 317 B1**
(45) Date of publication and mention of the grant of the patent: **06.10.2021**
(21) Application number: 16830315.4
(22) Date of filing: 13.07.2016
(51) Int. Cl.: B29C 45/00, C08K 5/30, C08L 77/00, C08L 59/00, C08K 5/28, C08L 77/08

(54) **POLYACETAL RESIN COMPOSITION AND POLYACETAL RESIN MOLDED ARTICLE**
POLYACETALHARZZUSAMMENSETZUNG UND POLYACETALHARZFORMARTIKEL
COMPOSITION DE RÉSINE POLYACÉTALIQUE ET ARTICLE MOULÉ EN RÉSINE POLYACÉTALIQUE

(30) Priority: 27.07.2015 JP 2015148161
(43) Date of publication of application: 06.06.2018
(73) Proprietor: Mitsubishi Engineering-Plastics Corporation, Tokyo 105-0021 (JP)
(72) Inventor: FUJIMOTO, Kunihiko, Hiratsuka-shi Kanagawa 254-0016 (JP); OSHIMA, Makiko, Hiratsuka-shi Kanagawa 254-0016 (JP); NAWATA, Hidetoshi, Tokyo 100-0011 (JP); SATO, Koki, Niigata-shi Niigata 950-3126 (JP); TAMAKI, Ryusuke, Niigata-shi Niigata 950-3126 (JP)
(74) Representative: Hoffmann Eitle
(86) International application number: PCT/JP2016/070626
(87) International publication number: WO 2017/018210

(56) References cited:
- EP-A1- 2 330 155
- WO-A1-2007/029835
- WO-A1-2015/115386
- JP-A- H11 293 034
- JP-A- S57 115 485
- JP-A- 2006 181 277
- JP-A- 2009 084 369
- JP-A- 2015 167 923

## Description

### TECHNICAL FIELD

The present invention relates to a polyacetal resin composition and a polyacetal resin molded article.

### BACKGROUND ART

Polyacetal resin is excellent in the balance of mechanical properties (such as friction resistance, abrasion resistance, creep resistance, or dimensional stability), and has extremely excellent fatigue resistance. Furthermore, the resin is excellent in chemical resistance as well, and has a reduced water-absorbing property. Accordingly, while taking advantage of these characteristics, the polyacetal resin is used as an engineering plastic for automobile interior parts, house interior parts (hot water mixing plugs), clothing parts (fasteners, belt buckles), building material uses (pipes, pump parts) and mechanical parts (gears), and there is an increasing demand for the polyacetal resin.

However, the polyacetal resin is slightly thermally decomposed by thermal history in the production, or molding of the resin. Accordingly, although in a very small amount, formaldehyde is generated. Herein, it is considered that the formaldehyde may possibly cause a sick house syndrome and thus a polyacetal resin composition having sufficiently suppressed generation of formaldehyde has been required.

As such a polyacetal resin composition, a composition disclosed in the following Patent Document 1 is known. In the following Patent Document 1, a polyacetal resin composition having a dihydrazone compound blended at predetermined ratio in a polyacetal resin is disclosed, and it is suggested that, with the polyacetal resin composition, the amount of formaldehyde generated from a product is reduced and contamination of a mold at the time of molding process is also suppressed.

Patent Document 2 describes a composition of polyacetal stabilized against the release of formaldehyde that comprises 100 parts of a polyacetal resin; 0.01 to 1 parts of a dihydrazide; 0.01 to 3 parts of a polyamide having either a melting or softening point below 180°C or an amine value of 2 mg KOH/g or more; and 0.01 to 5 parts of a coloring agent.

### CITATION LIST

### PATENT DOCUMENT

Patent Document 1: JP 2007-70574 A
Patent Document 2: EP 2 330 155 A1

### SUMMARY OF THE INVENTION

### PROBLEM TO BE SOLVED BY THE INVENTION

Meanwhile, for the coloring, generally, an inorganic pigment or an organic pigment may be blended as a coloring agent in the polyacetal resin composition.

However, in the polyacetal resin composition described in the above Patent Document 1, generation of formaldehyde may not be sufficiently suppressed when the composition is in a state in which it is blended with a coloring agent. Furthermore, it is required for the polyacetal resin composition to provide an excellent mechanical property to a polyacetal resin molded article.

The invention is made in view of the aforementioned circumstances, and an object of the invention is to provide a polyacetal resin composition capable of, while being blended with a coloring agent, sufficiently suppressing generation of formaldehyde, sufficiently suppressing contamination of a mold at the time of molding process, and providing an excellent mechanical property to a polyacetal resin molded article, and also to provide a polyacetal resin molded article.

### MEANS FOR SOLVING PROBLEM

To solve the problems described above, the present inventors repeated the studies. As a result, the present inventors speculated that, if a terminal group of a dihydrazone compound is set to a specific group which is less likely to cause steric hindrance, the reactivity between the dihydrazone compound and formaldehyde is increased, and thus generation of formaldehyde can be sufficiently suppressed. In addition, oxidation of formaldehyde yields formic acid, and the acidity caused by formic acid can further promote the decomposition of a polyacetal resin. Therefore, the present inventors considered a possibility that, according to blending of a polyamide resin having many amino groups at the terminal, the acidity caused by formic acid, which is generated by oxidation of formaldehyde, can be neutralized so that the decomposition of a polyacetal resin is suppressed. The present inventors also considered a possibility that, as a product obtained at that time is less likely to be bled out from the polyacetal resin composition, or even if the product is bled out, as it is less likely to adhere to a mold, contamination of a mold at the time of molding process can be also sufficiently suppressed. The present inventors also considered a possibility that, if a dihydrazone compound, a polyamide resin, and a coloring agent are blended in an appropriate amount relative to the polyacetal resin, a decrease in the mechanical property of a molded article can be suppressed. Therefore, the present inventors found that the above-described problems can be solved by the following inventions.

Namely, the invention is a polyacetal resin composition having a dihydrazone compound (B), which is composed of at least one selected from the group consisting of a dihydrazone compound (B1) represented by the following general formula (1) and a dihydrazone compound (B2) represented by the following general formula (2), blended at a ratio of 0.02 to 5 parts by mass, a polyamide resin (C) blended at a ratio of 0.01 to 3 parts by mass, a coloring agent (D), which is composed of at least one selected from the group consisting of an inorganic coloring agent and an organic coloring agent, blended at a ratio of 0.01 to 5 parts by mass and a hydrazide compound (E) blended at a ratio of 0.01 to 1 part by mass relative to 100 parts by mass of a polyacetal resin (A), in which the polyamide resin (C) is a polyamide resin which has at least one physical property of i) a physical property that the melting point or the softening point is not higher than 180°C and ii) a physical property that the amine value is not lower than 2 mgKOH/g. 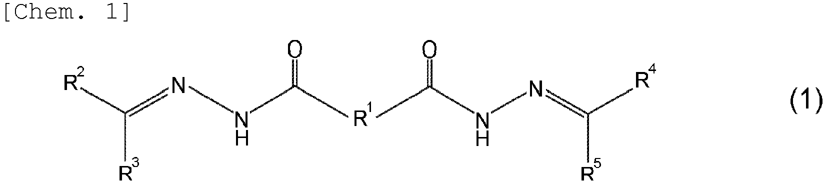 (in the formula, R¹ represents an aliphatic hydrocarbon group with carbon atom number of 4 to 19. R² to R⁵ each represent a methyl group) 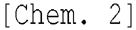 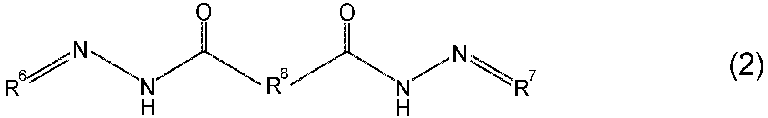 (in the formula, R⁸ represents an aliphatic hydrocarbon group with carbon atom number of 4 to 19, an alicyclic hydrocarbon group with carbon atom number of 6 to 10, or an aromatic hydrocarbon group with carbon atom number of 6 to 10. R⁶ and R⁷ each independently represent an alicyclic hydrocarbon group with carbon atom number of 3 to 12).

The polyacetal resin composition of the invention can, while being blended with a coloring agent, sufficiently suppress the generation of formaldehyde and sufficiently suppress the contamination of a mold at the time of molding process. The polyacetal resin composition of the invention can also provide an excellent mechanical property to a polyacetal resin molded article.

In the polyacetal resin composition, it is preferable that the polyamide resin (C) be a polyamide resin which has i) a physical property that the melting point or the softening point is not higher than 180°C.

In this case, the polyamide resin is in a molten state at a temperature of kneading with a polyacetal resin, and thus dispersibility of the polyamide resin is further improved.

In the polyacetal resin composition, it is preferable that the polyamide resin (C) be a polyamide resin which has both i) a physical property that the melting point or the softening point is not higher than 180°C and ii) a physical property that the amine value is not lower than 2 mgKOH/g.

In this case, generation of formaldehyde can be more effectively suppressed.

In the polyacetal resin composition, it is preferable that the polyamide resin (C) be composed of at least one selected from the group consisting of polyamide 12, polyamide 6/66 copolymer, polyamide 6/12 copolymer, polyamide 6/66/610 ternary copolymer, polyamide 6/66/610/12 quaternary copolymer, and a dimer acid polyamide resin.

In that case, generation of formaldehyde can be more effectively suppressed.

In the polyacetal resin composition, it is preferable that the polyamide resin (C) be a dimer acid polyamide resin.

In this case, generation of formaldehyde can be more effectively suppressed.

In the polyacetal resin composition, it is preferable that R¹ in the general formula (1) be an aliphatic hydrocarbon group with carbon atom number of 6 to 12.

In this case, the reactivity between the dihydrazone compound (B) and formaldehyde is further increased, and thus generation of formaldehyde is more effectively suppressed. Furthermore, contamination of a mold at the time of molding process can be more sufficiently suppressed.

In the polyacetal resin composition, it is preferable that the dihydrazone compound (B) be blended at a ratio of 0.05 to 3 parts by mass relative to 100 parts by mass of the polyacetal resin (A).

In this case, as compared to a case in which the blending amount of the dihydrazone compound (B) is less than 0.05 part by mass, generation of formaldehyde can be more sufficiently suppressed. In addition, as compared to a case in which the blending amount of the dihydrazone compound (B) is more than 3 parts by mass, the molding property is improved more so that a decrease in the mechanical property can be more sufficiently suppressed.

In the polyacetal resin composition, a hydrazide compound (E) is further blended at a ratio of 0.01 to 1 part by mass relative to 100 parts by mass of the polyacetal resin (A).

In this case, as compared to a case in which the blending amount of the hydrazide compound (E) is less than 0.01 part by mass relative to 100 parts by mass of the polyacetal resin (A), generation of formaldehyde can be more sufficiently suppressed. In addition, compared to a case in which the blending amount of the hydrazide compound (E) is more than 1 part by mass relative to 100 parts by mass of the polyacetal resin (A), contamination of a mold at the time of molding process can be sufficiently suppressed and also more excellent mechanical property can be provided to a polyacetal resin molded article which is obtained by molding the polyacetal resin composition.

In the polyacetal resin composition, it is preferable that the hydrazide compound (E) be a dihydrazide compound.

In this case, as compared to a case in which the hydrazide compound (E) is composed of only a monohydrazide compound or a case in which the hydrazide compound is composed of a monohydrazide compound and a dihydrazide compound, generation of formaldehyde can be more sufficiently suppressed.

In the polyacetal resin composition, it is preferable that the coloring agent (D) be composed of at least one selected from the group consisting of titanium yellow, titanium white, carbon black, perinone-based pigment, and phthalocyanine-based pigment.

In this case, generation of formaldehyde can be more effectively suppressed.

The invention is also a polyacetal resin molded article obtained by molding the polyacetal resin composition.

The polyacetal resin molded article can sufficiently suppress generation of formaldehyde and, at the same, can have an excellent mechanical property.

Meanwhile, the melting point in the invention is a temperature at the peak top of an endothermic peak observed by differential scanning calorimetry (DSC). The endothermic peak means an endothermic peak observed when the polyamide resin (C) as a sample is once heated and melted to thereby eliminate the effect on crystallinity due to thermal history and then heated again. Specifically, in a case in which the polyamide resin (C) is polyamide 12, for example, the melting point can be obtained by the method below. Namely, temperature of a sample is raised from 30 to 210°C at a rate of 10°C/min, held at 210°C for 2 min, and then lowered to 50°C at a rate of 20°C/min. Furthermore, the temperature is raised up to 210°C at a rate of 10°C/min, and the melting point is obtained from the peak top of the endothermic peak observed when the temperature is raised. The maximum temperature during temperature increase may be adjusted corresponding to the expected melting point of the polyamide resin, and is selected, usually, within a range up to the melting point + 50°C. The expression that "melting point is not higher than 180°C" means that the polyamide resin always has the melting point of not higher than 180°C as it is observed by DSC within the weight average molecular weight range of from 500 to 100,000.

Furthermore, the softening point in the invention is a temperature measured according to JIS K2207 standard.

Furthermore, the amine value in the invention is a value defined by the mass of potassium hydroxide (KOH) equivalent to perchloric acid which is required for neutralizing all basic components contained in a polyamide resin molecule per unit mass. The amine value is obtained, for example, by dissolving 1 g of a polyamide resin as a sample in m-cresol, titrating the solution by potentiometric titration with a perchloric acid methanol solution, and converting the amount of perchloric acid required for neutralizing the polyamide resin to mass (unit: mg) of KOH.

### EFFECT OF THE INVENTION

According to the invention, a polyacetal resin composition capable of, while being blended with a coloring agent, sufficiently suppressing generation of formaldehyde, sufficiently suppressing contamination of a mold at the time of molding process, and providing an excellent mechanical property to an article, and also a polyacetal resin molded article can be provided.

### MODE(S) FOR CARRYING OUT THE INVENTION

The invention is explained in detail hereinbelow.

### <Polyacetal resin composition>

The invention is a polyacetal resin composition having a dihydrazone compound (B), which is composed of at least one selected from a group consisting of a dihydrazone compound (B1) represented by the following general formula (1) and a dihydrazone compound (B2) represented by the following general formula (2), blended at a ratio of 0.02 to 5 parts by mass, a polyamide resin (C) blended at a ratio of 0.01 to 3 parts by mass, and a coloring agent (D), which is composed of at least one selected from a group consisting of an inorganic pigment and an organic pigment, blended at a ratio of 0.01 to 5 parts by mass relative to 100 parts by mass of a polyacetal resin (A), in which the polyamide resin (C) is a polyamide resin which has at least one physical property of i) a physical property that the melting point or the softening point is not higher than 180°C and ii) a physical property that the amine value is not lower than 2 mgKOH/g. 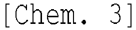 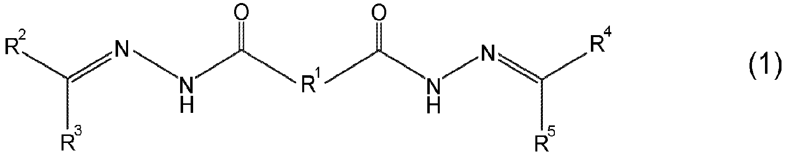 (in the formula, R¹ represents an aliphatic hydrocarbon group with carbon atom number of 4 to 19. R² to R⁵ each represent a methyl group) 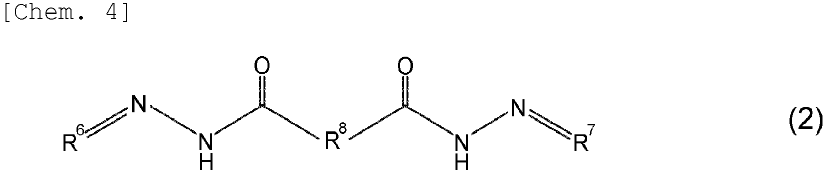 (in the formula, R⁸ represents an aliphatic hydrocarbon group with carbon atom number of 4 to 19, an alicyclic hydrocarbon group with carbon atom number of 6 to 10, or an aromatic hydrocarbon group with carbon atom number of 6 to 10. R⁶ and R⁷ each independently represent an alicyclic hydrocarbon group with carbon atom number of 3 to 12).

The polyacetal resin composition can, while being blended with a coloring agent, sufficiently suppress the generation of formaldehyde and sufficiently suppress the contamination of a mold at the time of molding process. The polyacetal resin composition of the invention can also provide an excellent mechanical property to a polyacetal resin molded article.

The polyacetal resin composition of the invention additionally contains the hydrazide compound (E). In this case, compared to a case in which the hydrazide compound (E) is not blended, generation of formaldehyde can be more sufficiently suppressed.

Hereinbelow, the polyacetal resin (A), the dihydrazone compound (B), the polyamide resin (C), the coloring agent (D), and the hydrazide compound (E) that are used for the polyacetal resin composition of the invention are explained in detail.

### (A) Polyacetal resin

The polyacetal resin is not particularly limited, and it may be a homopolymer including only a divalent oxymethylene group as a constitutional unit or a copolymer including a divalent oxymethylene group and a divalent oxyalkylene group having carbon atom number of 2 to 6 as constitutional units.

Examples of the oxyalkylene group having carbon atom number of 2 to 6 include an oxyethylene group, an oxypropylene group, and an oxybutylene group, an oxypentylene group, and an oxyhexylene group.

With regard to the polyacetal resin, the ratio of the oxyalkylene group having carbon atom number of 2 to 6 to the total mole number of the oxymethylene group and the oxyalkylene group having carbon atom number of 2 to 6 is not particularly limited, and it may be 0.5 to 10% by mol, for example.

In order to produce the above-described polyacetal resin, typically, trioxane is used as a main raw material. Furthermore, in order to introduce an oxyalkylene group having carbon atom number of 2 to 6 into the polyacetal resin, for example, cyclic formal or cyclic ether can be used. Specific examples of the cyclic formal include 1,3-dioxolan, 1,3-dioxane, 1,3-dioxepane, 1,3-dioxocane, 1,3,5-trioxepane, and 1,3,6-trioxocane. Specific examples of the cyclic ether include ethylene oxide, propylene oxide, and butylene oxide. In order to introduce an oxyethylene group into the polyacetal resin (A), for example, 1,3-dioxolan may be used as a main raw material, in order to introduce an oxypropylene group into the polyacetal resin (A), 1,3-dioxane may be used as a main raw material, and in order to introduce an oxybutylene group into the polyacetal resin (A), 1,3-dioxepane may be used as a main raw material. Furthermore, it is desirable that, in the polyacetal resin, each of a hemiformal terminal group, a formyl terminal group, and a terminal group that is unstable relative to heat, an acid, and a base be contained in a small amount. Herein, the hemiformal terminal group is represented by -OCH₂OH, and the formyl terminal group is represented by -CHO.

### (B) Dihydrazone compound

The dihydrazone compound (B) to be blended in the polyacetal resin composition of the invention is composed of at least one of a dihydrazone compound (B1) represented by the above general formula (1) and a dihydrazone compound (B2) represented by the above general formula (2).

In the general formula (1), R¹ represents an aliphatic hydrocarbon group with carbon atom number of 4 to 19.

The aliphatic hydrocarbon group may be saturated or unsaturated, or may be linear or branched. R¹ is preferably an aliphatic hydrocarbon group with carbon atom number of 6 to 12. In this case, the reactivity between the dihydrazone compound (B) and formaldehyde is further increased, and thus generation of formaldehyde can be sufficiently suppressed. Furthermore, contamination of a mold at the time of molding process can be more sufficiently suppressed.

Specific examples of the aliphatic hydrocarbon group include alkylene groups such as a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, an octadecylene group, and a nonadecylene group.

The alicyclic hydrocarbon group may be saturated or unsaturated.

Examples of the alicyclic hydrocarbon group include a cycloalkylene group having carbon atom number of 6 to 10. Examples of the cycloalkylene group include a cyclohexylene group.

Examples of the aromatic hydrocarbon group include an arylene group such as a phenylene group and a naphthylene group.

It is desirable that a substituent is bonded to at least a part of carbon atoms of the aromatic hydrocarbon group. Examples of this substituent include a halogen group, a nitro group, and an alkyl group having carbon atom number of 1 to 20.

In the general formula (1), R² to R⁵ each represent a methyl group.

Specific examples of the dihydrazone compound (B1) represented by the above general formula (1) include 1,12-bis[2-(1-methylethylidene)hydrazino]]-1,12-dodecanedione, 1,10-bis[2-(1-methylethylidene)hydrazino]]-1,10-decanedione, and 1,6-bis[2-(1-methylethylidene)hydrazino]-1,6-hexanedione.

The dihydrazone compound (B1) represented by the above general formula (1) may be blended either singly or in combination of two or more kinds thereof.

R⁸ in the general formula (2) is an aliphatic hydrocarbon group having carbon atom number of 4 to 19, an alicyclic hydrocarbon group with carbon atom number of 6 to 10, or an aromatic hydrocarbon group with carbon atom number of 6 to 10. R⁸ may be the same or different from R¹ in the general formula (1).

R⁶ and R⁷ each independently represent an alicyclic hydrocarbon group with carbon atom number of 3 to 12.

Examples of the alicyclic hydrocarbon group with carbon atom number of 3 to 12 include a cyclohexylene group.

Specific examples of the dihydrazone compound (B2) represented by the above general formula (2) include 1,12-bis(2-cyclohexylidenehydrazino)-1,12-dodecanedione, 1,10-bis(2-cyclohexylidenehydrazino)-1,10-decanedione, and 1,6-bis(2-cyclohexylidenehydrazino)-1,6-hexanedione.

The dihydrazone compound (B2) represented by the above general formula (2) may be blended either singly or in combination of two or more kinds thereof.

The blending amount of the dihydrazone compound (B) is 0.02 to 5 parts by mass relative to 100 parts by mass of the polyacetal resin. Accordingly, compared to a case in which the blending amount of the dihydrazone compound (B) is less than 0.02 part by mass, generation of formaldehyde can be sufficiently suppressed. Furthermore, compared to a case in which the blending amount of the dihydrazone compound (B) is more than 5 parts by mass, more excellent mechanical property can be provided by the polyacetal resin composition to a polyacetal resin molded article.

The blending amount of the dihydrazone compound (B) is preferably 0.05 to 3 parts by mass relative to 100 parts by mass of the polyacetal resin. Accordingly, compared to a case in which the blending amount of the dihydrazone compound (B) is less than 0.05 part by mass, generation of formaldehyde can be more sufficiently suppressed. Furthermore, compared to a case in which the blending amount of the dihydrazone compound (B) is more than 3 parts by mass, more excellent mechanical property can be imparted to a polyacetal resin molded article which is obtained by molding the polyacetal resin composition.

The blending amount of the dihydrazone compound (B) is more preferably 0.1 to 1.0 part by mass relative to 100 parts by mass of the polyacetal resin.

Moreover, the dihydrazone compound (B1) and the dihydrazone compound (B2) can be obtained by reacting a dicarboxylic acid derivative such as dicarboxylic acid halide or dicarboxylic acid ester and hydrazine to generate a dihydrazide compound and reacting the dihydrazide compound and ketone or aldehyde. At this time, R¹(COX)₂ or R⁸(COX)₂ is used as dicarboxylic acid halide and R¹(COOY)₂ or R⁸(COOY)₂ is used as dicarboxylic acid ester. Herein, Y represents an alkyl group. As ketone or aldehyde, R²-C(=O)-R³, R⁴-C(=O)-R⁵, R⁶=O, or R⁷=O is used.

### (C) Polyamide resin

The polyamide resin (C) blended in the polyacetal resin composition of the invention is a polyamide resin which has at least one physical property of i) a physical property that the melting point or the softening point is not higher than 180°C and ii) a physical property that the amine value is not lower than 2 mgKOH/g. By blending this polyamide resin in the polyacetal resin composition, generation of formaldehyde can be effectively suppressed.

The polyamide resin (C) is preferably a polyamide resin which has i) a physical property that the melting point or the softening point is not higher than 180°C. In this case, compared to a case in which the polyamide resin (C) is a polyamide resin with melting point or softening point of less than 180°C, the polyamide resin (C) can be in a molten state at a temperature of kneading with a polyacetal resin, and thus dispersibility of the polyamide resin is further improved. As such a polyamide resin, any of an aliphatic polyamide resin, an alicyclic polyamide resin, and an aromatic polyamide resin can be used.

Moreover, the polyamide resin (C) may be one composed of one kind of a constitutional unit, or one composed of plural kinds of constitutional units. Examples of the raw materials (C) of the polyamide resin include ω-amino acid, preferably linear ω-amino acids having carbon atom number of 6 to 12, and lactams thereof; dicarboxylic acids such as adipic acid, sebacic acid, dodecanedicarboxylic acid, heptadecanedicarboxylic acid, isophthalic acid and terephthalic acid, and dimethyl esters thereof; and diamines such as hexamethylenediamine. In the case of a copolymerized polyamide composed of plural kinds of constitutional units, the copolymerization ratio, the copolymerization form (random copolymer, block copolymer, cross-linked polymer) or the like can arbitrarily be selected. In the invention, as the polyamide resin (C), polyamide 12, polyamide 6/12 copolymer, polyamide 6/66/610 ternary copolymer, polyamide 6/66/610/12 quaternary copolymer, or a mixture of two or more kinds of them is preferable. In this case, generation of formaldehyde can be more effectively suppressed.

The melting point or the softening point of the polyamide resin (C) is preferably 175°C or less, and more preferably 170°C or less.

Furthermore, in the invention, the polyamide resin (C) having an amine value of not lower than 2 mgKOH/g is also preferable. Such a polyamide resin having many amino groups at the end has an effect that neutralizes acidity due to formic acid generated by the oxidation of formaldehyde and suppresses the decomposition of the polyacetal resin. The amine value is preferably 2.5 mgKOH/g or more, more preferably 3 mgKOH/g or more, even more preferably 5 mgKOH/g or more, and particularly preferably 8 mgKOH/g or more. The amine value of not lower than 2 mgKOH/g causes more effective suppression of the decomposition of a polyacetal resin. The amine value is usually 100 mgKOH/g or less, and preferably 80 mgKOH/g or less. The blending of a coloring agent to a polyacetal resin tends to yield easier decomposition of the polyacetal resin, leading to easier generation of formaldehyde. The formaldehyde forms formic acid when it is oxidized, and the acidity due to the formic acid causes the decomposition of the polyacetal resin to be furthermore accelerated. In the invention, the blending of the polyamide resin having many amino groups at the end with a polyacetal resin makes it possible to neutralize the acidity due to the formic acid generated by the oxidation of formaldehyde, to suppress the decomposition of the polyacetal resin.

The amine value of polyamide resin can be adjusted by polymerizing dicarboxylic acid and diamine while adjusting the charging ratio, or by reacting the polyamide resin obtained by the polymerization with an end adjuster such as amine by heating. As the amines used as the end adjuster, those having carbon atom number of 6 to 22 are preferable. Examples of those amines include aliphatic primary amines such as hexylamine, octylamine, decylamine, laurylamine, myristylamine, palmitylamine, stearylamine, and behenylamine.

Furthermore, the use of dimer acid as dicarboxylic acid is also preferable. Namely, as the polyamide resin, a dimer acid polyamide resin obtained by reaction between dimer acid and diamine is preferable. In this case, generation of formaldehyde can be more effectively suppressed. The dimer acid is formed by dimerizing unsaturated fatty acids such as oleic acid, linoleic acid or erucic acid, and one representative example thereof contains mainly dibasic acid having carbon atom number of 36 and/or hydrogenated product thereof, and, in addition, a small amount of monobasic acid (monomer) having carbon atom number of 18 and tribasic acid (trimer) having carbon atom number of 54. Dimer acid polyamide resin obtained by reacting dimer acid and diamine has a melting point or a softening point of not higher than 180°C, and can be used appropriately.

The polyamide resin may have an arbitrary weight average molecular weight, but it is usually 500 to 100,000, and preferably 1,000 to 50,000. Meanwhile, the weight average molecular weight means the value in terms of polystylene measured by gel permeation chromatography (GPC).

The polyamide resin (C) in the invention is preferably a polyamide resin having a melting point or softening point of not higher than 180°C and an amine value of not lower than 2 mgKOH/g. In this case, generation of formaldehyde can be more effectively suppressed.

The blending amount of the polyamide resin (C) is 0.01 to 3 parts by mass, relative to 100 parts by mass of polyacetal resin (A). When two or more kinds of the polyamide resin (C) are used, the total amount thereof falls within the above-mentioned range. In this case, compared to a case in which the blending amount of the polyamide resin (C) is less than 0.01 part by mass relative to 100 parts by mass of the polyacetal resin (A), the generation amount of formaldehyde from a polyacetal resin molded article can be sufficiently reduced. On the contrary, compared to a case in which the blending amount of the polyamide resin (C) is more than 3 parts by mass relative to 100 parts by mass of the polyacetal resin (A), a decrease in the mechanical strength of the polyacetal resin molded article can be suppressed. The blending amount of the polyamide resin (C) is usually 0.05 part by mass or more, but preferably 0.1 part by mass or more, relative to 100 parts by mass of the polyacetal resin (A). Furthermore, the blending amount of the polyamide resin (C) is preferably 2 parts by mass or less, and more preferably 1 part by mass or less.

### (D) Coloring agent

As inorganic and organic pigments constituting the coloring agent (D) to be blended in the polyacetal resin composition of the invention, general inorganic pigments and organic pigments described in "Pigment Handbook (edited by Japan Association of Pigment Technology)" can be used. Examples of the inorganic pigments include (complex) metal oxides containing titanium such as titanium white and titanium yellow, zinc oxide, iron oxide, carbon black, ultramarine blue, zinc sulfide, antimony trioxide, or the like. Examples of the organic pigments include phthalocyanine-based pigment, anthraquinone-based pigment, quinacridone-based pigment, azo-based pigment, isoindolinone-based pigment, quinophthalone-based pigment, perinone-based pigment, perylene-based pigment, or the like. It is preferable that the coloring agent (D) be titanium yellow, titanium white, carbon black, perinone-based pigment, or phthalocyanine-based pigment. In this case, generation of formaldehyde can be more effectively suppressed.

The blending amount of the coloring agent (D) in the polyacetal resin composition of the invention is 0.01 to 5 parts by mass, relative to 100 parts by mass of polyacetal resin (A). If the blending amount of the coloring agent (D) is more than 5 parts by mass, generation of formaldehyde cannot be sufficiently suppressed. On the other hand, if the blending amount of the coloring agent (D) is less than 0.01 part by mass, coloration cannot significantly be obtained. The blending amount of the coloring agent (D) is preferably 0.05 part by mass or more, and more preferably 0.1 part by mass or more. The blending amount of the coloring agent (D) is preferably 3 parts by mass or less, and more preferably 2 parts by mass or less.

Meanwhile, when the coloring agent (D) is blended, a dispersion aid or a spreading agent may be blended. Examples of the dispersion aids include amide wax, ester wax, olefin wax, or the like, and examples of the spreading agents include liquid paraffin, or the like. Furthermore, a dye may be used in combination with the coloring agent (D) to obtain a polyacetal resin composition with desired color tone.

### (E) Hydrazide compound

The hydrazide compound (E) is a hydrazide compound having at least one hydrazide group in the molecule. Examples of the hydrazide compound (E) include a monohydrazide compound, a dihydrazide compound, and a polyhydrazide compound such as a trihydrazide compound. Meanwhile, in the present specification, a hydrazide compound having three or more hydrazide groups in the molecule is referred to as a polyhydrazide compound.

Any of an aliphatic monohydrazide compound and an aromatic monohydrazide compound can be used as a monohydrazide compound.

Examples of the aliphatic monohydrazide compound include propionic acid hydrazide, thiocarbohydrazide, and stearic acid hydrazide.

Examples of the aromatic monohydrazide compound include salicylic acid hydrazide, 3-hydroxy-2-naphthoic acid hydrazide, p-toluenesulfonyl hydrazide, aminobenzhydrazide, and 4-pyridinecarboxylic acid hydrazide.

In addition, any of an aliphatic dihydrazide compound and an aromatic dihydrazide compound can be used as a dihydrazide compound.

Examples of the aliphatic dihydrazide compound include carbodihydrazide, oxalic acid dihydrazide, malonic acid dihydrazide, succinic acid dihydrazide, glutaric acid dihydrazide, adipic acid dihydrazide, azelaic acid dihydrazide, sebacic acid dihydrazide, dodecanedioic acid dihydrazide (1,12-dodecane dicarbohydrazide), 1,18-octadecane dicarbohydrazide, stearic acid dihydrazide, maleic acid dihydrazide, fumaric acid dihydrazide, and 7,11-octadecadien-1,18-dicarbohydrazide.

Examples of the aromatic dihydrazide compound include isophthalic acid dihydrazide, terephthalic acid dihydrazide, 1,5-naphthalene dicarbohydrazide, 1,8-naphthalene dicarbohydrazide, 2,6-naphthalene dicarbohydrazide, 4,4'-oxybisbenzenesulfonyl hydrazide, and 1,5-diphenyl carbonohydrazide.

Examples of the polyhydrazide compound include aminopolyacrylamide and 1,3,5-tris(2-hydrazinocarbonylethyl)isocyanurate.

The hydrazide compound (E) may be used either singly or as a mixture of two or more kinds thereof. In the polyacetal resin composition of the invention, the blending amount of the hydrazide compound (E) is 0.01 to 1 part by mass relative to 100 parts by mass of the polyacetal resin (A).

In this case, as compared to a case in which the blending amount of the hydrazide compound (E) is less than 0.01 part by mass relative to 100 parts by mass of the polyacetal resin (A), generation of formaldehyde can be more sufficiently suppressed. In addition, as compared to a case in which the blending amount of the hydrazide compound (E) is more than 1 part by mass relative to 100 parts by mass of the polyacetal resin (A), contamination of a mold at the time of molding process can be sufficiently suppressed, and more excellent mechanical property can be provided to a molded article obtainable by molding the polyacetal resin composition. The blending amount of the hydrazide compound (E) is preferably 0.01 to 0.5 part by mass relative to 100 parts by mass of the polyacetal resin (A) .

The hydrazide compound (E) is preferably composed of a monohydrazide compound, a dihydrazide compound, or a mixture thereof.

In this case, as compared to a case in which the hydrazide compound (E) is composed of a hydrazide compound having three or more hydrazide groups in the molecule, the hydrazide group can be efficiently dispersed in the polyacetal resin and the addition amount of the hydrazide compound (E) can be more sufficiently suppressed.

In particular, the hydrazide compound (E) is preferably composed only of a dihydrazide compound. In this case, as compared to a case in which the hydrazide compound is composed only of a monohydrazide compound or a case in which the hydrazide compound is composed of a monohydrazide compound and a dihydrazide compound, generation of formaldehyde can be more sufficiently suppressed.

The polyacetal resin composition of the invention may contain, if necessary, at least one of a thermal stabilizing agent (F), a mold releasing agent (G), and a weather-resistant agent (H). Hereinbelow, the thermal stabilizing agent (F), the mold releasing agent (G), and the weather-resistant agent (H) are explained in detail.

### (F) Thermal stabilizing agent

The thermal stabilizing agent is not particularly limited, but a hindered phenol compound or a triazine compound is preferably used as the thermal stabilizing agent. It is possible that only one kind of these compounds is blended or two or more kinds thereof are blended in combination. In this case, generation of formaldehyde is more effectively suppressed.

The hindered phenol (sterically hindered phenol) compound indicates a compound having at least one structure that is represented by the following general formula (3) and has a substituent at an ortho position relative to a phenolic hydroxyl group, in the molecule.

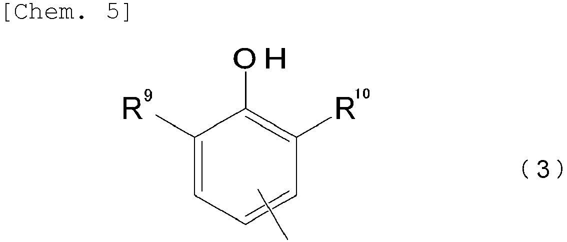

In the general formula (3), R⁹ and R¹⁰ each independently represent a substituted or unsubstituted alkyl group.

Examples of the alkyl group represented by R⁹ and R¹⁰ include groups having carbon atom number of 1 to 6 such as a methyl group, an ethyl group, a propyl group, a butyl group, an amyl group, or a hexyl group. Among them, a bulky branched alkyl group such as a t-butyl group is preferable, and at least one of R⁹ and R¹⁰ is preferably the branched alkyl group like this. As the substituted alkyl group, those in which a hydrogen atom of an unsubstituted alkyl group is substituted with a halogen atom such as chlorine or the like can be used.

Examples of the hindered phenol compound used in the invention include 2,2'-methylene-bis(4-methyl-6-t-butylphenol), 4,4'-methylene-bis(2,6-di-t-butylphenol), 1,3,5-trimethyl-2,4,6-tris(3,5-di-t-butyl-4-hydroxybenzyl)benzene, 3,5-di-t-butyl-4-hydroxybenzyldimethylamine, distearyl-3,5-di-t-butyl-4-hydroxybenzylphosphonate, diethyl-3,5-di-t-butyl-4-hydroxybenzylphosphonate, 2,6,7-trioxa-1-phospha-bicyclo[2,2,2]-oct-4-yl-methyl-3,5-di-t-butyl-4-hydroxyhydrocinnamate, 3,5-di-t-butyl-4-hydroxyphenyl-3,5-distearyl-thiotriazylamine, 2-(2-hydroxy-3,5-di-t-butylphenyl)-5-chlorobenzotriazol, 2,6-di-t-butyl-4-hydroxymethylphenol, 2,4-bis-(n-octylthio)-6-(4-hydroxy-3,5-di-t-butylanilino)-1,3,5-triazine, N,N'-hexamethylenebis(3,5-di-t-butyl-4-hydroxy-hydrocinnamamide), octadecyl-3-(3,5-di-t-butyl-4-hydroxyphenyl)propionate, 1,6-hexanediol-bis[3-(3,5-di-t-butyl-4-hydroxyphenyl)propionate], pentaerythritol-tetrakis[3-(3,5-di-t-butyl-4-hydroxyphenyl)propionate], triethylene glycol-bis[3-(3,5-dimethyl-4-hydroxyphenyl)propionate], triethylene glycol-bis[3-(3-t-butyl-5-methyl-4-hydroxyphenyl)propionate], triethylene glycol-bis[3-(3,5-di-t-butyl-4-hydroxyphenyl)propionate], and 2,2'-thiodiethyl-bis[3-(3,5-di-t-butyl-4-hydroxyphenyl)propionate].

Among them, a compound having a structure represented by the following general formula (4), such as N,N-hexamethylenebis(3,5-di-t-butyl-4-hydroxyhydrocinnamamide), is preferable.

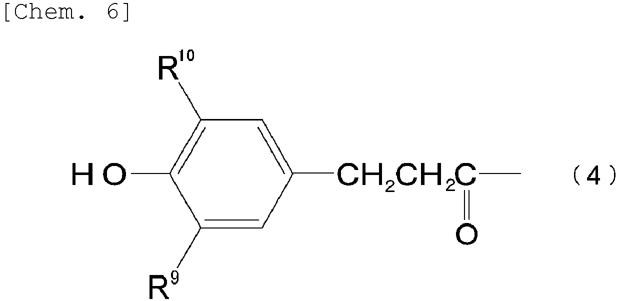

In the general formula (4), R⁹ and R¹⁰ each have the same meaning as R⁹ and R¹⁰ in the general formula (3).

Furthermore, preferable are also esters of propionic acid having a 3,5-dialkyl-4-hydroxyphenyl group at the 3-position and polyhydric alcohol such as 1,6-hexanediol-bis[3-(3,5-di-t-butyl-4-hydroxyphenyl)propionate], pentaerythritol-tetrakis[3-(3,5-di-t-butyl-4-hydroxyphenyl)propionate], triethylene glycol-bis[3-(3,5-dimethyl-4-hydroxyphenyl)propionate], triethylene glycol-bis[3-(3-t-butyl-5-methyl-4-hydroxyphenyl)propionate], triethylene glycol-bis[3-(3,5-di-t-butyl-4-hydroxyphenyl)propionate], and 2,2'-thiodiethyl-bis[3-(3,5-di-t-butyl-4-hydroxyphenyl)propionate].

The triazine compound is basically an amino-substituted triazine compound having a structure represented by the following general formula (5) or an initial polycondensate of the amino-substituted triazine compound and formaldehyde. 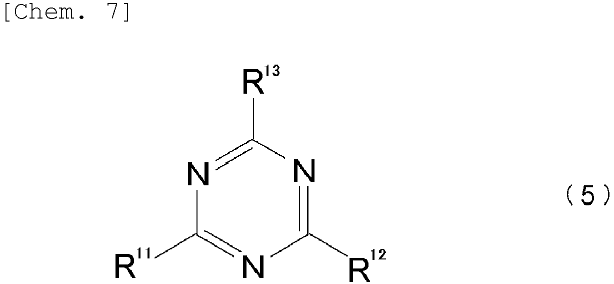 (in the above general formula (5), R¹¹, R¹², and R¹³ each independently represent a hydrogen atom, a halogen atom, a hydroxyl group, a mercapto group, an alkyl group, an aralkyl group, an aryl group, a cycloalkyl group, an amino group, or a substituted amino group, and at least one of R¹¹, R¹², and R¹³ represents an amino group or a substituted amino group).

Specific examples of the amino-substituted triazine compound or initial polycondensate of the amine-substituted triazine compound and formaldehyde include guanamine, melamine, N-butylmelamine, N-phenylmelamine, N,N-diphenylmelamine, N,N-diallylmelamine, N,N',N"-triphenylmelamine, N,N',N''-trimethylolmelamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, and ameline(N,N,N',N'-tetracyanoethylbenzoguanamine), and an initial polycondensate of these amino-substituted triazine compounds and formaldehyde. Among them, melamine, methylolmelamine, benzoguanamine, and a water-soluble melamine-formaldehyde resin are particularly preferable.

The blending amount of the thermal stabilizing agent (F) is preferably 0.01 to 3 parts by mass, more preferably 0.05 to 2 parts by mass, and even more preferably 0.1 to 1 part by mass relative to 100 parts by mass of the polyacetal resin. When the blending amount of the thermal stabilizing agent (F) is 0.01 to 3 parts by mass, as compared to a case in which the blending amount of the thermal stabilizing agent (F) is less than 0.01 part by mass, thermal decomposition of the polyacetal resin is more effectively suppressed, and thus generation of formaldehyde is more effectively suppressed. In addition, as compared to a case in which the blending amount of the thermal stabilizing agent (F) is more than 3 parts by mass, the mechanical property of the polyacetal resin composition can be further improved.

### (G) Mold releasing agent

The mold releasing agent is not particularly limited, but polyethylene, silicone oil, fatty acid, fatty acid ester, or a fatty acid metal salt is preferably used as the mold releasing agent. They may be blended either singly or in combination of two or more kinds thereof. In this case, contamination of a mold at the time of molding process is more effectively suppressed.

Examples of the polyethylene include polyethylene wax such as low molecular weight polyethylene or a low molecular weight polyethylene copolymer and modified polyethylene wax in which a polar group is introduced by oxidation modification or acid modification of those polyethylene waxes. The number average molecular weight of polyethylene is preferably 500 to 15,000 and more preferably 1,000 to 10,000.

The polyethylene wax such as low molecular weight polyethylene or a low molecular weight polyethylene copolymer can be produced by a method of directly polymerizing ethylene or ethylene and α-olefin with a Ziegler catalyst or the like, a method of obtaining polyethylene wax as a by-product obtained when high molecular weight polyethylene or a copolymer thereof is produced, a method of thermally decomposing high molecular weight polyethylene or a copolymer thereof, or the like. As such polyethylene wax, copolymer type polyethylene wax obtained from 50 to 99% by mol of ethylene and 1 to 50% by mol of α-olefin is preferable, and particularly preferable polyethylene wax is polyethylene wax in which α-olefin is propylene.

Oxidation modified polyethylene wax is obtained by treating polyethylene wax with peroxide, oxygen or the like so as to introduce a polar group such as a carboxyl group, a hydroxyl group or the like. Acid modified polyethylene wax is obtained by treating polyethylene wax with an inorganic acid, an organic acid, unsaturated carboxylic acid or the like, as necessary, in the presence of peroxide or oxygen so as to introduce a polar group such as a carboxyl group, a sulfonic acid group or the like. These polyethylene waxes are commercially available under the names of general type high-density polyethylene wax, general type low-density polyethylene wax, low oxidized polyethylene wax, highly oxidized polyethylene wax, acid modified polyethylene wax, or a special monomer modified product, and they can be easily acquired from the market.

Examples of the silicone oil include silicone oil composed of polydimethylsiloxane, silicone oil in which some of methyl groups of polydimethylsiloxane are substituted with a phenyl group, silicone oil in which some of methyl groups of polydimethylsiloxane are substituted with hydrogen or an alkyl group having carbon atom number of two or more, silicone oil in which some of methyl groups of polydimethylsiloxane are substituted with a halogenated phenyl group, silicone oil in which some of methyl groups of polydimethylsiloxane are substituted with a fluoroester group, epoxy-modified silicone oil such as polydimethylsiloxane having an epoxy group, amino-modified silicone oil such as polydimethylsiloxane having an amino group, alkyl aralkyl silicone oil containing a dimethylsiloxane unit and a phenylmethylsiloxane unit, polyether-modified silicone oil such as polydimethylsiloxane having a structure in which some of methyl groups of the dimethylsiloxane unit are substituted with polyether, and alkyl aralkyl polyether-modified silicone oil such as a polymer of phenylmethylsiloxane and dimethylsiloxane in which some of methyl groups of the dimethylsiloxane unit are substituted with polyether.

Examples of fatty acid include saturated or unsaturated fatty acid having carbon atom number of 12 or more. Examples of the fatty acid include lauric acid, tridecyl acid, myristic acid, pentadecyl acid, palmitic acid, heptadecyl acid, stearic acid, nonadecane acid, arachic acid, behenic acid, lignoceric acid, cerotic acid, heptacosanoic acid, montanic acid, melissic acid, lacceric acid, oleic acid, elaidic acid, linoleic acid, linolenic acid, arachidonic acid, cetolic acid, and erucic acid. The fatty acid is preferably saturated fatty acid having carbon atom number of 12 to 22.

Examples of the fatty acid ester include fatty acid ester of fatty acid having carbon atom number of 5 to 32 and monohydric or polyhydric alcohol having carbon atom number of 2 to 30. Examples of the fatty acid include saturated fatty acid such as caproic acid, caprylic acid, undecylic acid, lauryl acid, tridecyl acid, myristic acid, palmitic acid, stearic acid, behenic acid, lignoceric acid, cerotic acid, montanic acid, or melissic acid; or unsaturated fatty acid such as oleic acid, elaidic acid, linoleic acid, linolenic acid, arachidonic acid, brassidic acid, erucic acid, or ricinoleic acid. Examples of the alcohol include monohydric alcohol such as propyl alcohol, isopropyl alcohol, butyl alcohol, octyl alcohol, capryl alcohol, lauryl alcohol, myristyl alcohol, stearyl alcohol, or behenyl alcohol; or polyhydric alcohol such as ethylene glycol, propylene glycol, butanediol, glycerin, pentaerythritol, or sorbitan. The fatty acid ester is preferably fatty acid ester of fatty acid having carbon atom number of 12 to 22 and monohydric or polyhydric alcohol having carbon atom number of 2 to 22.

A fatty acid metal salt is a salt of a higher fatty acid and metal. The higher fatty acid indicates a fatty acid having carbon atom number of 12 or more. Examples of the higher fatty acid include stearic acid, oleic acid, octanoic acid, lauryl acid, behenic acid, ricinoleic acid and the like. Examples of metal include zinc, calcium, magnesium, nickel, copper and the like.

The blending amount of the mold releasing agent (G) is preferably 0.01 to 3 parts by mass, more preferably 0.05 to 2.5 parts by mass, and even more preferably 0.05 to 2 parts by mass relative to 100 parts by mass of the polyacetal resin. When the blending amount of the mold releasing agent (G) is 0.01 to 3 parts by mass relative to 100 parts by mass of the polyacetal resin, as compared to a case in which the blending amount of the mold releasing agent (G) is less than 0.01 part by mass, contamination of a mold at the time of molding process is more effectively suppressed. In addition, as compared to a case in which the blending amount of the mold releasing agent (G) is more than 3 parts by mass, the mechanical property of the polyacetal resin composition can be further improved.

### (H) Weather-resistant agent

It is preferable that a weather-resistant agent be further blended in the polyacetal resin composition of the invention. In this case, generation of formaldehyde can be more effectively suppressed. As the weather-resistant agent, a hindered amine-based light stabilizing agent or an ultraviolet absorbing agent is preferably used.

### Hindered amine-based light stabilizing agent

The hindered amine-based light stabilizing agent is an amine with a piperidine structure represented by the following general formula (6). In the following general formula (6), X represents an organic group which binds to the nitrogen atom of the piperidyl group via a carbon atom. Y represents a portion of the hindered amine-based light stabilizing agent other than the piperidine structure represented by the following general formula (6). Preferred examples of X include an alkyl group having carbon atom number of 1 to 10, a group represented by the following formula (7) or formula (8). When X is an alkyl group, examples of the alkyl group include a linear or branched alkyl group having carbon atom number of 1 to 10 such as a methyl group, an ethyl group, a propyl group, a t-butyl group, a hexyl group, an octyl group, and a decyl group. Among them, a methyl group is particularly preferable as the alkyl group. Furthermore, the hindered amine-based light stabilizing agent used in the invention may have plural piperidine structures in the molecule. In this case, it is preferable that all of the piperidine structures have an N-carbon atom-2,2,6,6-tetramethyl-4-piperidyl structure. Namely, it is preferable that all piperidine structures have a structure that is represented by the following general formula (6) and X is an alkyl group.

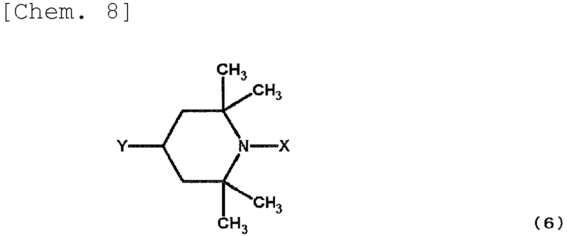

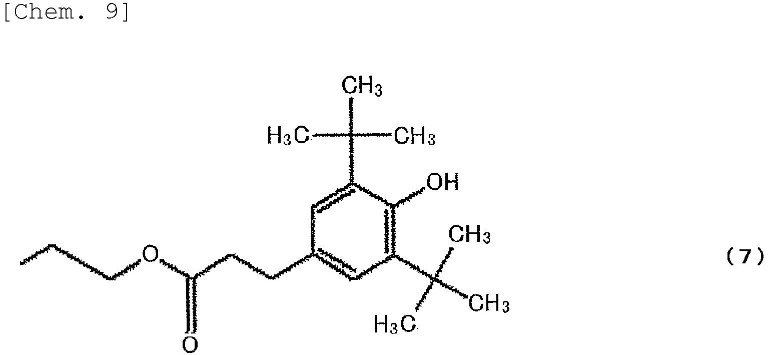

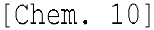

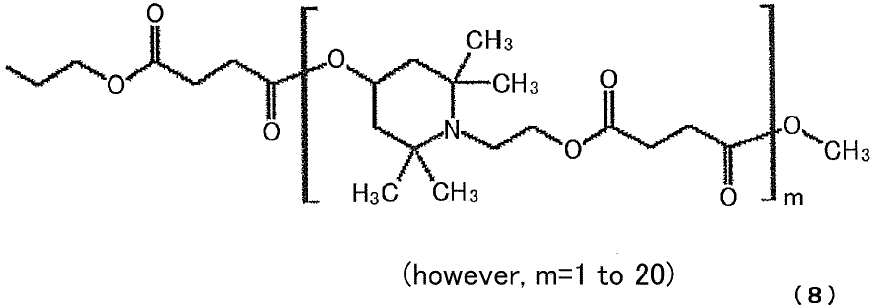

Specific examples of a preferred hindered amine-based light stabilizing agent include the following compounds. 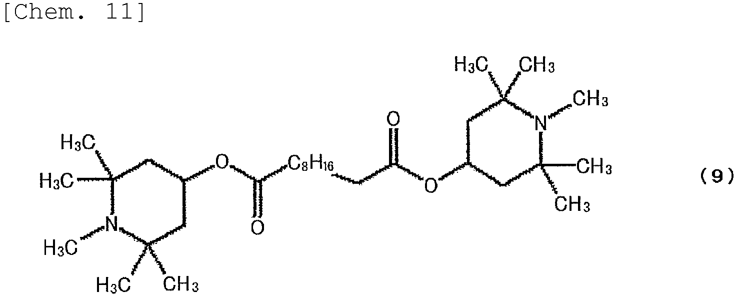 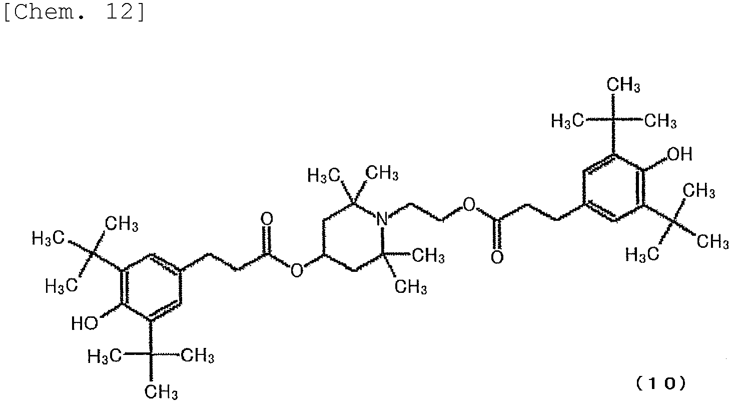 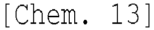 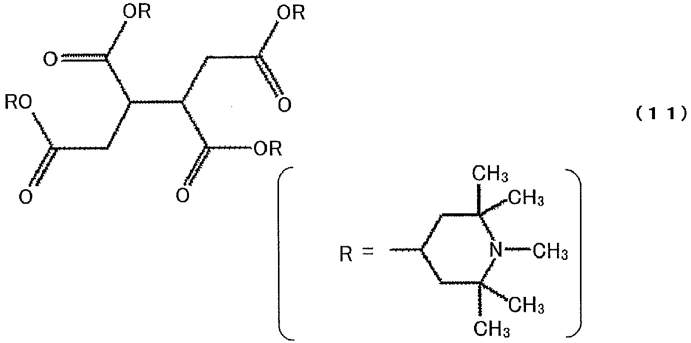 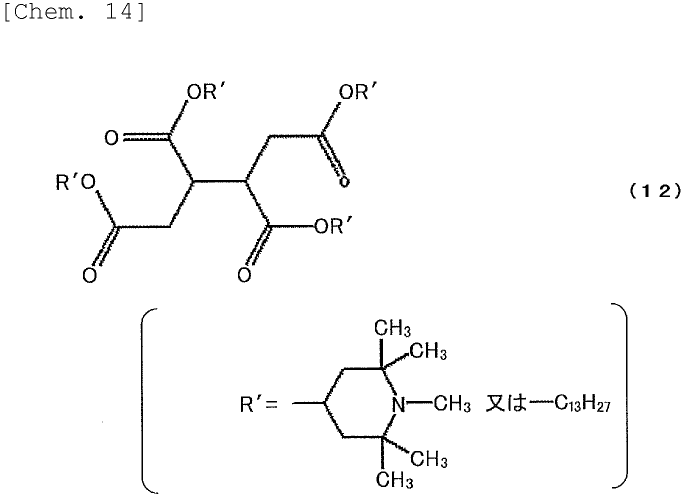 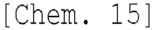 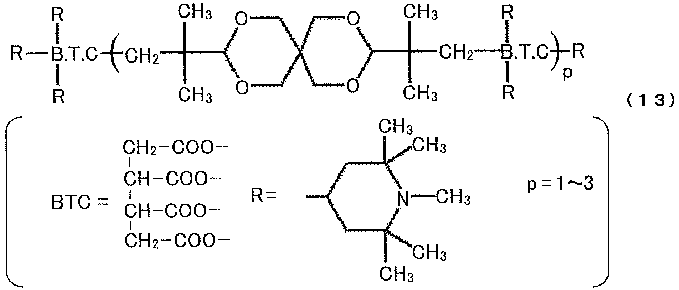 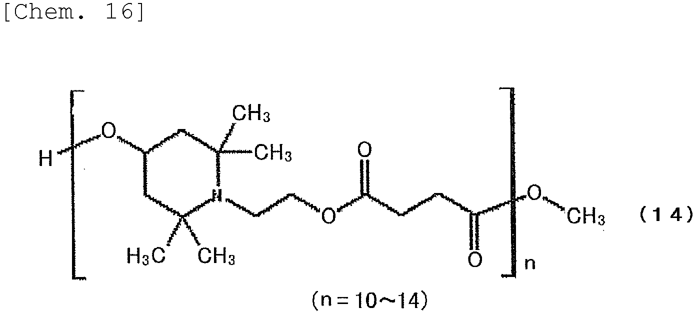 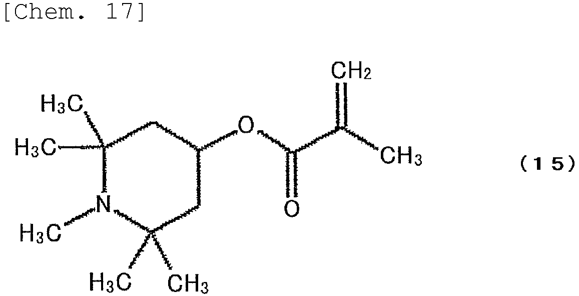 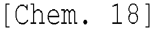 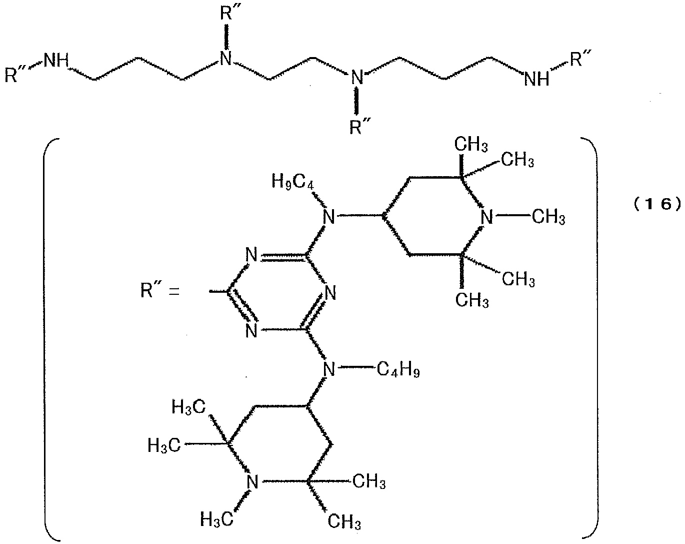 or 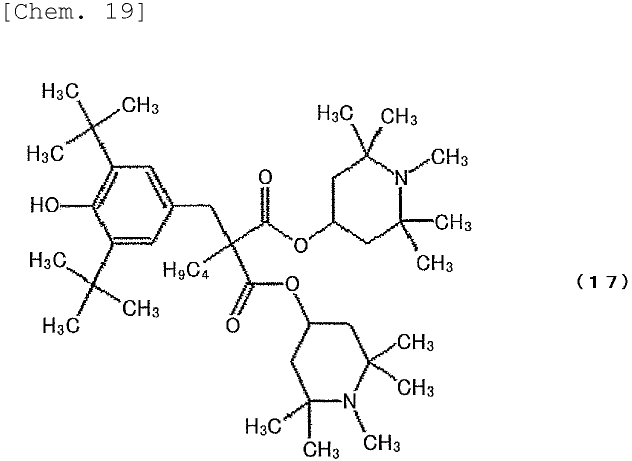
Formula (9): bis(1,2,2,6,6-pentamethyl-4-piperidinyl)sebacate
Formula (10): 1-[2-[3-(3,5-di-t-butyl-4-hydroxyphenyl)propionyloxy]ethyl]-4-[3-(3,5-di-t-butyl-4-hydroxyphenyl)propionyloxy]-2,2,6,6-tetramethylpiperidine
Formula (11): tetrakis(1,2,2,6,6-pentamethyl-4-piperidyl)-1,2,3,4-butanetetracarboxylate
Formula (12): 1,2,2,6,6-pentamethyl-4-piperidyl and tridecyl-1,2,3,4-butanetetracarboxylate (a mixture of compounds in which some of four Rs of butanetetracarboxylate are 1,2,2,6,6-pentamethyl-4-piperidyl group and the others are a tridecyl group)
Formula (13): a condensate of 1,2,3,4-butanetetracarboxylic acid, 1,2,2,6,6-pentamethyl-4-piperidinol, and β,β,β,β-tetramethyl-3,9(2,4,8,10-tetraoxaspiro[5,5]undecane)-diethanol (p is 1 to 3)
Formula (14): a condensate of dimethyl succinate and 4-hydroxy-2,2,6,6-tetramethyl-1-piperidineethanol (n is 10 to 14) 1,2,2,6,6-pentamethyl-4-piperidyl methacrylate represented by Formula (15)
Formula (16): N,N',NN'''-tetrakis-(4,6-bis-(butyl-(N-methyl-2,2,6,6-tetramethylpiperidine-4-yl)amino)-triazine-2-yl)-4,7-diazadecane-1,10-diamine
Formula (17): bis(1,2,2,6,6-pentamethyl-4-piperidyl)[[3,5-bis(1,1-dimethylethyl)-4-hydroxyphenyl]methyl]butylmalonate.

In the invention, the hindered amine-based light stabilizing agent may be blended either singly or in combination of two or more kinds thereof. Particularly preferred among the above hindered amine-based light stabilizing agents are the hindered amine-based light stabilizing agent that is represented by the formula (10), (11), (12), (13), (14), (15), or (17).

The blending amount of the hindered amine-based light stabilizing agent is preferably 0.01 to 5 parts by mass relative to 100 parts by mass of the polyacetal resin. In this case, compared to a case in which the blending amount of the hindered amine-based light stabilizing agent is less than 0.01 part by mass relative to 100 parts by mass of the polyacetal resin, a sufficient weather-resistant property (for example, effect of delaying the crack occurring time) is obtained. Furthermore, compared to a case in which the blending amount of the hindered amine-based light stabilizing agent is more than 5 parts by mass relative to 100 parts by mass of the polyacetal resin, a decrease in the mechanical property can be suppressed and mold contamination can also be suppressed. A preferred blending amount of the hindered amine-based light stabilizing agent is 0.01 to 3 parts by mass, and more preferred amount thereof is 0.03 to 2 parts by mass.

### Ultraviolet absorbing agent

The ultraviolet absorbing agent used in the invention is a compound that has a function of absorbing ultraviolet rays. Examples thereof include benzotriazole-based compounds, benzophenone-based compounds, aromatic banzoate-based compounds, cyanoacrylate-based compounds, and anilide oxalate-based ultraviolet absorbing agents.

Specific examples of the preferred ultraviolet absorbing agent include 2-(2'-hydroxy-5'-methylphenyl)benzotriazole, 2,2'-methylenebis[6-(2H-benzotriazol-2-yl)-4-(1,1,3,3-tetramethylbutyl)phenol], 2-(2H-benzotriazol-2-yl)-4,6-bis(1-methyl-1-phenylethyl)phenol, 2-(2'-hydroxy-3',5'-di-isoamyl-phenyl)benzotriazole, 2-[2'-hydroxy-3',5'-bis-(α,α-dimethylbenzyl)phenyl]benzotriazole, 2-(2'-hydroxy-4'-octoxyphenyl)benzotriazole, 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, 2-hydroxy-4-oxybenzylbenzophenone, 2-hydroxy-4-methoxy-5-sulfobenzophenone, p-t-butylphenyl salicylate, p-octylphenyl salicylate, 2-ethylhexyl-2-cyano-3,3'-diphenylacrylate, ethyl-2-cyano-3,3'-diphenylacrylate, N-(2-ethoxy-5-t-butylphenyl)oxalic acid diamide, N-(2-ethylphenyl)-N'-(2-ethoxyphenyl)oxalic acid diamide, and the like.

The blending amount of the ultraviolet absorbing agent is preferably 0.01 to 5 parts by mass relative to 100 parts by mass of the polyacetal resin. In this case, compared to a case in which the blending amount of the ultraviolet absorbing agent is less than 0.01 part by mass relative to 100 parts by mass of the polyacetal resin, a sufficient weather-resistant property is obtained. Furthermore, compared to a case in which the blending amount of the ultraviolet absorbing agent is more than 5 parts by mass relative to 100 parts by mass of the polyacetal resin, a decrease in the mechanical property can be suppressed. A preferred blending amount of the ultraviolet absorbing agent is 0.01 to 3 parts by mass, and more preferred amount thereof is 0.03 to 2 parts by mass.

### <Method of producing polyacetal resin composition>

The method of producing the polyacetal resin composition of the invention is not particularly limited. The composition can be produced by mixing the (A) to (D) components and other components to be added, if necessary, in an arbitrary order, and kneading the mixture. Conditions such as temperature in the mixing and kneading, pressure and the like may appropriately be selected in view of conventionally known methods for producing polyacetal resin compositions. For example, the kneading may be performed at a temperature not lower than the melting temperature of the polyacetal resin, and, usually, it is preferably performed at 180°C or more. As a production apparatus, mixing and kneading apparatuses conventionally used for producing such resin compositions may be used.

Specifically, for example, after blending simultaneously or in an arbitrary order, to the polyacetal resin (A), a predetermined amount of the dihydrazone compound (B), the polyamide resin (C), and the coloring agent (D), and furthermore the hydrazide compound (E) and, if desired, other additives or the like, they are mixed by a tumbler type blender or the like. Subsequently, the obtained mixture is melted and kneaded by a single or twin screw extruder, extruded into a strand shape and then formed into pellets. Thus, the polyacetal resin composition having a desired composition can be obtained.

Furthermore, there is such an alternative method as mixing, relative to the polyacetal resin (A), the dihydrazone compound (B), the polyamide resin (C), and the hydrazide compound (E), and then melting and kneading the mixture to thereby form pellets. To the pellet, the coloring agent (D) is added, and then the mixture is mixed, melted and kneaded again to form pellets. Thus, the polyacetal resin composition having a desired color tone can also be obtained.

The polyacetal resin composition of the invention thus obtained can attain high mechanical strength, for example, a tensile strength of 60 MPa or more, preferably 62 MPa or more measured according to ISO 527 standard. Furthermore, the polyacetal resin composition of the invention shows a small generation amount of formaldehyde and little mold contamination. The polyacetal resin composition of the invention is also excellent in the balance of these performances as compared to conventional polyacetal resin compositions.

### <Polyacetal resin molded article>

The invention is also a polyacetal resin molded article which is obtained by molding the polyacetal resin composition described above. Namely, the invention is a polyacetal resin molded article which is composed of the polyacetal resin composition described above.

According to the polyacetal resin molded article of the invention, not only the generation of formaldehyde can be sufficiently suppressed but also an excellent mechanical property can be obtained.

The molding method is not particularly limited. As the molding method, a well-known molding process method for a polyacetal resin composition can be used. From the viewpoint of the fluidity and processability, an injection molding is preferable as the molding method.

The polyacetal resin molded article of the invention can be applied to various products conventionally known as the use of a polyacetal resin composition, including materials such as pellets, round bars and thick plates, and various other parts such as sheets, tubes, various vessels, machines, electricity, automobiles, and building materials.

### EXAMPLES

Hereinbelow, the invention is more specifically described with reference to Examples, Reference Examples and Comparative Examples. However, the invention is not limited to the following Examples.

The materials used in Examples, Reference Examples and Comparative Examples are as described below.

### (A) Polyacetal resin (POM)

A: Acetal copolymer which is obtained by copolymerization of trioxane and 1,3-dioxolan such that the content of 1,3-dixoloan is 4.2% by mass in POM, and which has a melt index (ASTM-D1238 standard: 190°C, 2.16 Kg) of 10.5 g/10 min.

### (B) Dihydrazone compound

B-1: 1,12-bis[2-(1-methylethylidene)hydrazino]]-1,12-dodecane dione
B-2: 1,12-bis(2-cyclohexylidenehydrazino)-1,12-dodecane dione
B-3: 1,6-bis[2-(1-methylethylidene)hydrazino]-1,6-hexane dione
B-4: 1,3-bis[2-(1-methylethylidene)hydrazinocarbonyl]benzene
B-5: 1,18-bis[2-(1-methylethylidene)hydrazino)-1,18-octadecane dione
B-6: 1,4-bis[2-(1-methylethylidene)hydrazino)-1,4-cyclohexane dione
B-7: 1,4-bis[2-(1-methylethylidene)hydrazino)-1,4-butane dione
B-8: 1,22-bis[2-(1-methylethylidene)hydrazino)-1,22-docosane dione

### (C) Polyamide resin

C-1: dimer acid polyamide resin (manufactured by Kao Corporation, trade name: LEOMIDE FT-409, melting point of 115°C, amine value of 10.4 mgKOH/g)
C-2: dimer acid polyamide resin (manufactured by Kao Corporation, trade name: LEOMIDE FT-410, melting point of 105°C, amine value of 24.0 mgKOH/g)
C-3: dimer acid polyamide resin (manufactured by T&K TOKA, trade name: TOHMIDE TXM-272, softening point of 125°C, amine value of 3.0 mgKOH/g)
C-4: polyamide 6/66/610 ternary copolymer (manufactured by TORAY INDUSTRIES, INC., trade name: AMILAN CM4000, melting point of 140°C, amine value of 3.0 mgKOH/g)
C-5: polyamide 12 (manufactured by EMS-CHEMIE (Japan) Ltd., trade name: Grill-Amide L20G, melting point of 175°C, amine value of 2.5 mgKOH/g)
C-6: polyamide 6 (manufactured by DSM, trade name: Novamid (registered trade mark) 1010C2, melting point of 220°C, amine value of 1.5 mgKOH/g)

### (D) Coloring agent

### Inorganic pigment

D-1: titanium white; Pigment White 6 (manufactured by Ishihara Sangyo Kaisha, Ltd., trade name: TIPAQUE CR-63)
D-2: carbon black; Pigment Black 7 (manufactured by Evonik Degussa Japan Co., Ltd., trade name: PRINTEX)
D-3: titanium yellow; Pigment Yellow 53 (manufactured by Ishihara Sangyo Kaisha, Ltd., trade name: TIPAQUE Yellow TY-70S)

### Organic pigment

D-4: perinone-based orange; Pigment Orange 43 (manufactured by Clariant Japan K.K., trade name: PV Fast Orange GRL)
D-5; Phthalocyanine Blue; Pigment Blue 15:3 (manufactured by SUMIKA COLOR CO., LTD., trade name: Sumitomo Cyanine Blue GH)

### (E) Hydrazide compound

E-1: 1,10-dodecane diacid dihydrazide (manufactured by JAPAN FINECHEM COMPANY, INC., product number: N-12)
E-2: adipic acid dihydrazide (manufactured by JAPAN FINECHEM COMPANY, INC., product number: ADH)

### Amine value

Amine value was measured according to the following method. Polyamide resin C-1 to polyamide resin C-6 were weighed in an amount of 3 g for each, and dissolved in 80 ml of m-cresol. For potentiometric titration, AT-500N manufactured by KYOTO ELECTRONICS MANUFACTURING CO., LTD. was used, and the titration was performed according to a potentiometric method using a 0.05 mol/l perchloric acid methanol solution as a titrant. The amount of perchloric acid required for neutralization of the polyamide resin was converted to mass of KOH (unit: mg) to thereby obtain an amine value.

### (Reference Examples 1 to 35, Examples 36 to 41 and Comparative Examples 1 to 10)

Relative to 100 parts by mass of the polyacetal resin (A), each component was blended at a ratio shown in the following Tables 1 to 14, and then homogeneously mixed by using Super Mixer manufactured by KAWATA MFG Co., Ltd. The obtained mixture was melted and kneaded using a biaxial extruder (PCM-30 manufactured by Ikegai Corp., screw diameter: 30 mm) according to the general method under the conditions of a screw rotation number of 120 rpm and a cylinder setting temperature of 190°C, extruded into a strand, and cut with a pelletizer to thereby obtain a polyacetal resin composition.

### [Property evaluation]

### (1) Effect of suppressing formaldehyde generation

Regarding an effect of suppressing the generation of formaldehyde, the generation amount of formaldehyde was measured and the evaluation was made on the basis of the generation amount of formaldehyde. The generation amount of formaldehyde was obtained as follows.

### <Preparation of flat-plate test piece>

First, pellets of the polyacetal resin compositions obtained in Reference Examples 1 to 35, Examples 36 to 41 and Comparative Examples 1 to 10 were injection-molded by using an injection molding machine PS-40 manufactured by NISSEI PLASTIC INDUSTRIAL CO., LTD. at a cylinder temperature of 215°C and a mold temperature of 80°C to prepare flat-plate test pieces of 100 mm × 40 mm × 2 mm.

### <Measurement of generation amount of formaldehyde>

On the day after the preparation of the flat-plate test piece, for the same flat-plate test piece, the generation amount of formaldehyde (µg/g-POM) was measured by the following method according to the method described in German Automobile Industrial Association Standard VDA275 (Automobile Indoor Parts-Quantitative determination of discharge amount of formaldehyde by revised flask method).
(i) First, 50 ml of distilled water was put into a polyethylene vessel, the lid thereof was closed in a state in which the flat-plate test piece was hung in the air, and the vessel was heated in a sealed state at 60°C for 3 hours.
(ii) Subsequently, after leaving the vessel in a sealed state at room temperature for 60 minutes, the flat-plate test piece was taken out.
(iii) The amount of formaldehyde absorbed into the distilled water in the polyethylene vessel was measured by acetylacetone colorimetry using a UV spectrometer, and a value obtained by dividing the amount of formaldehyde by the mass of POM in the flat-plate test piece was used as the generation amount of formaldehyde. The results thereof are presented in Tables 1 to 14.

Meanwhile, in Tables 1 to 14, criteria of pass/non-pass regarding the effect of suppressing generation of formaldehyde were set as follows.
Formaldehyde generation amount is 2.6 µg/g-POM or less: pass
Formaldehyde generation amount is more than 2.6 µg/g-POM: non-pass

### (2) Effect of suppressing mold contamination

The effect of suppressing contamination of a mold was evaluated as follows. First, using a Minimat M8/7A molding machine manufactured by Sumitomo Heavy Industries, Ltd. with a so-called droplet type mold, 3000-shot continuous molding was performed on the pellets of the polyacetal resin compositions obtained in Reference Examples 1 to 35, Examples 36 to 41 and Comparative Examples 1 to 10 at a molding temperature of 200°C and a mold temperature of 80°C. After the completion of molding, the state of inner wall surfaces of the mold was observed with a naked eye. Herein, criteria regarding the effect of suppressing contamination of a mold were set as follows.
A: There is no matter adhered to the mold and the effect of suppressing contamination of a mold is extremely good.
B: There is a slightly small amount of matters adhered to the mold and the effect of suppressing contamination of a mold is extremely good.
C: There is a small amount of matters adhered to the mold but the effect of suppressing contamination of a mold is good.
D: There is a large amount of matters adhered to the mold and the effect of suppressing contamination of a mold is poor.

Herein, A to C were considered to pass and D was considered to non-pass. The results thereof are presented in Tables 1 to 14.

### (3) Mechanical property

The mechanical property was evaluated as follows. First, using an injection molding machine (product name: EC100S, manufactured by TOSHIBA MACHINE CO., LTD.), temperatures of four cylinders disposed toward the downstream side from upstream side were set to 190°C, 190°C, 180°C, and 170°C, respectively, the mold temperature was set to 90°C, and the pellets of the polyacetal resin compositions obtained in Reference Examples 1 to 35, Examples 36 to 41 and Comparative Examples 1 to 10 were injection-molded to thereby prepare test pieces for tensile test specified by ISO9988-2 standard. Then, using a tensile tester (product name: STROGRAPH APII, manufactured by Toyo Seiki Seisaku-sho, Ltd.), the tensile test was performed on the test pieces for tensile test under the condition according to ISO527 standard and the tensile yield strength was measured. The results thereof are presented in Tables 1 to 14. In Tables 1 to 14, criteria of pass/non-pass regarding the mechanical property were as follows.
Tensile yield strength is 60 MPa or higher: pass
Tensile yield strength is lower than 60 MPa: non-pass

**[Table 1]**

| | | Reference Example 1 | Reference Example 2 | Reference Example 3 | Reference Example 4 | Reference Example 5 |
|---|---|---|---|---|---|---|
| (A) Polyacetal resin | | 100 | 100 | 100 | 100 | 100 |
| (B) Dihydrazone compound | B-1 | 0.02 | 0.05 | 0.1 | 0.3 | 0.5 |
| (C) Polyamide resin | C-1 | 0.3 | 0.3 | 0.3 | 0.3 | 0.3 |
| (D)Coloring agent | D-1 | 0.5 | 0.5 | 0.5 | 0.5 | 0.5 |
| | D-2 | 0.1 | 0.1 | 0.1 | 0.1 | 0.1 |
| Effect of suppressing formaldehyde | Generation amount of HCHO at 215°C (unit: µg/g-POM) | 1.8 | 1.3 | 1 | 0.7 | 0.6 |
| Mold contamination property (MD) | | A | A | A | A | A |
| Mechanical property | Tensile yield strength (MPa) | 62 | 62 | 62 | 62 | 62 |

**[Table 2]**

| | | Reference Example 6 | Reference Example 7 | Reference Example 8 | Comparative Example 1 | Comparative Example 2 |
|---|---|---|---|---|---|---|
| (A) Polyacetal resin | | 100 | 100 | 100 | 100 | 100 |
| (B) Dihydrazone compound | B-1 | 1 | 3 | 5 | | 10 |
| (C) Polyamide resin | C-1 | 0.3 | 0.3 | 0.3 | 0.3 | 0.3 |
| (D) Coloring agent | D-1 | 0.5 | 0.5 | 0.5 | 0.5 | 0.5 |
| | D-2 | 0.1 | 0.1 | 0.1 | 0.1 | 0.1 |
| Effect of suppressing formaldehyde | Generation amount of HCHO at 215°C (unit: µg/g-POM) | 0.5 | 0.5 | 0.5 | 13 | 0.4 |
| Mold contamination property (MD) | | B | B | B | A | B |
| Mechanical property | Tensile yield strength (MPa) | 62 | 61 | 60 | 62 | 57 |

**[Table 3]**

| | | Reference Example 9 | Reference Example 10 | Reference Example 11 |
|---|---|---|---|---|
| (A) Polyacetal resin | | 100 | 100 | 100 |
| (B) Dihydrazone compound | B-1 | 0.1 | 0.1 | 0.1 |
| (C) Polyamide resin | C-2 | 0.3 | | |
| | C-3 | | 0.3 | |
| | C-4 | | | 0.3 |
| | C-5 | | | |
| | C-6 | | | |
| (D) Coloring agent | D-1 | 0.5 | 0.5 | 0.5 |
| | D-2 | 0.1 | 0.1 | 0.1 |
| Effect of suppressing formaldehyde | Generation amount of HCHO at 215°C (unit: µg/g-POM) | 0.8 | 1.1 | 1.5 |
| Mold contamination property (MD) | | A | A | A |
| Mechanical property | Tensile yield strength (MPa) | 62 | 62 | 62 |

**[Table 4]**

| | | Reference Example 12 | Comparative Example 3 | Comparative Example 4 |
|---|---|---|---|---|
| (A) Polyacetal resin | | 100 | 100 | 100 |
| (B) Dihydrazone compound | B-1 | 0.1 | 0.1 | 1 |
| (C) Polyamide resin | C-2 | | | |
| | C-3 | | | |
| | C-4 | | | |
| | C-5 | 0.3 | | |
| | C-6 | | 0.3 | 0.3 |
| (D) Coloring agent | D-1 | 0.5 | 0.5 | 0.5 |
| | D-2 | 0.1 | 0.1 | 0.1 |
| Effect of suppressing formaldehyde | Generation amount of HCHO at 215°C (unit: µg/g-POM) | 1.8 | 13 | 12 |
| Mold contamination property (MD) | | A | A | A |
| Mechanical property | Tensile yield strength (MPa) | 62 | 62 | 62 |

**[Table 5]**

| | | Reference Example 13 | Reference Example 14 | Reference Example 15 | Reference Example 16 |
|---|---|---|---|---|---|
| (A) Polyacetal resin | | 100 | 100 | 100 | 100 |
| (B) Dihydrazone compound | B-1 | 0.1 | 0.1 | 0.1 | 0.1 |
| (C) Polyamide resin | C-1 | 0.1 | 1 | | |
| | C-4 | | | 0.1 | 1 |
| (D) Coloring agent | D-1 | 0.5 | 0.5 | 0.5 | 0.5 |
| | D-2 | 0.1 | 0.1 | 0.1 | 0.1 |
| Effect of suppressing formaldehyde | Generation amount of HCHO at 215°C (unit: µg/g-POM) | 1.3 | 0.6 | 1.8 | 1 |
| Mold contamination property (MD) | | A | A | A | A |
| Mechanical property | Tensile yield strength (MPa) | 62 | 61 | 62 | 61 |

**[Table 6]**

| | | Comparative Example 5 | Comparative Example 6 | Comparative Example 7 |
|---|---|---|---|---|
| (A) Polyacetal resin | | 100 | 100 | 100 |
| (B) Dihydrazone compound | B-1 | 0.1 | 1 | 0.1 |
| (C) Polyamide resin | C-1 | | | 4 |
| | C-4 | | | |
| (D) Coloring agent | D-1 | 0.5 | 0.5 | 0.5 |
| | D-2 | 0.1 | 0.1 | 0.1 |
| Effect of suppressing formaldehyde | Generation amount of HCHO at 215°C (unit: µg/g-POM) | 18 | 10 | 0.5 |
| Mold contamination property (MD) | | A | A | A |
| Mechanical property | Tensile yield strength (MPa) | 62 | 62 | 58 |

**[Table 7]**

| | | Reference Example 17 | Reference Example 18 | Reference Example 19 | Reference Example 20 |
|---|---|---|---|---|---|
| (A) Polyacetal resin | | 100 | 100 | 100 | 100 |
| (B) Dihydrazone compound | B-1 | | | | |
| | B-2 | 0.3 | | | |
| | B-3 | | 0.3 | | |
| | B-4 | | | 0.3 | |
| | B-5 | | | | 0.3 |
| | B-6 | | | | |
| | B-7 | | | | |
| | B-8 | | | | |
| (C) Polyamide resin | C-1 | 0.1 | 0.1 | 0.1 | 0.1 |
| | C-4 | | | | |
| (D) Coloring agent | D-1 | 0.5 | 0.5 | 0.5 | 0.5 |
| | D-2 | 0.1 | 0.1 | 0.1 | 0.1 |
| Effect of suppressing formaldehyde | Generation amount of HCHO at 215°C (unit: µg/g-POM) | 1.6 | 0.9 | 0.7 | 2.6 |
| Mold contamination property (MD) | | A | A | A | A |
| Mechanical property | Tensile yield strength (MPa) | 62 | 62 | 62 | 62 |

**[Table 8]**

| | | Reference Example 21 | Comparative Example 8 | Comparative Example 9 | Comparative Example 10 |
|---|---|---|---|---|---|
| (A) Polyacetal resin | | 100 | 100 | 100 | 100 |
| (B) Dihydrazone compound | B-1 | | | | |
| | B-2 | | | | |
| | B-3 | | | | |
| | B-4 | | | | |
| | B-5 | | | | |
| | B-6 | 0.3 | | | |
| | B-7 | | 0.3 | 0.3 | |
| | B-8 | | | | 0.3 |
| (C) Polyamide resin | C-1 | 0.1 | 0.1 | 0.3 | 0.3 |
| | C-4 | | | | |
| (D) Coloring agent | D-1 | 0.5 | 0.5 | 0.5 | 0.5 |
| | D-2 | 0.1 | 0.1 | 0.1 | 0.1 |
| Effect of suppressing formaldehyde | Generation amount of HCHO at 215°C (unit: µg/g-POM) | 0.6 | 1 | 0.7 | 5.1 |
| Mold contamination property (MD) | | A | D | D | A |
| Mechanical property | Tensile yield strength (MPa) | 62 | 62 | 62 | 62 |

**[Table 9]**

| | | Reference Example 22 | Reference Example 23 | Reference Example 24 | Reference Example 25 |
|---|---|---|---|---|---|
| (A) Polyacetal resin | | 100 | 100 | 100 | 100 |
| (B) Dihydrazone compound | B-1 | 0.1 | | 0.1 | |
| | B-3 | | 0.1 | | 0.1 |
| (C) Polyamide resin | C-1 | 0.3 | 0.3 | 0.3 | 0.3 |
| (D) Coloring agent | D-3 | 0.5 | 0.5 | 1 | 1 |
| Effect of suppressing formaldehyde | Generation amount of HCHO at 215°C (unit: µg/g-POM) | 0.8 | 0.7 | 1.2 | 1.1 |
| Mold contamination property (MD) | | A | A | A | A |
| Mechanical property | Tensile yield strength (MPa) | 62 | 62 | 62 | 62 |

**[Table 10]**

| | | Reference Example 26 | Reference Example 27 | Reference Example 28 | Reference Example 29 |
|---|---|---|---|---|---|
| (A) Polyacetal resin | | 100 | 100 | 100 | 100 |
| (B) Dihydrazone compound | B-1 | 0.1 | | 0.1 | |
| | B-3 | | 0.1 | | 0.1 |
| (C) Polyamide resin | C-1 | 0.3 | 0.3 | | |
| | C-4 | | | 0.3 | 0.3 |
| (D) Coloring agent | D-4 | 0.4 | 0.4 | 0.4 | 0.4 |
| Effect of suppressing formaldehyde | Generation amount of HCHO at 215°C (unit: µg/g-POM) | 0.8 | 0.7 | 1.3 | 1.2 |
| Mold contamination property (MD) | | A | A | A | A |
| Mechanical property | Tensile yield strength (MPa) | 62 | 62 | 62 | 62 |

**[Table 11]**

| | | Reference Example 30 | Reference Example 31 | Reference Example 32 | Reference Example 33 |
|---|---|---|---|---|---|
| (A) Polyacetal resin | | 100 | 100 | 100 | 100 |
| (B) Dihydrazone compound | B-1 | 0.1 | | 0.1 | |
| | B-3 | | 0.1 | | 0.1 |
| (C) Polyamide resin | C-1 | 0.3 | 0.3 | | |
| | C-4 | | | 0.3 | 0.3 |
| (D) Coloring agent | D-5 | 0.3 | 0.3 | 0.3 | 0.3 |
| Effect of suppressing formaldehyde | Generation amount of HCHO at 215°C (unit: µg/g-POM) | 1 | 0.9 | 1.5 | 1.4 |
| Mold contamination property (MD) | | A | B | B | B |
| Mechanical property | Tensile yield strength (MPa) | 62 | 62 | 62 | 62 |

**[Table 12]**

| | | Reference Example 34 | Reference Example 35 |
|---|---|---|---|
| (A) Polyacetal resin | | 100 | 100 |
| (B) Dihydrazone compound | B-1 | 0.1 | |
| | B-3 | | 0.1 |
| (C) Polyamide resin | C-1 | 0.3 | 0.3 |
| (D) Coloring agent | D-1 | 0.3 | 0.3 |
| | D-2 | 0.02 | 0.02 |
| | D-4 | 0.01 | 0.01 |
| Effect of suppressing formaldehyde | Generation amount of HCHO at 215°C (unit: µg/g-POM) | 1 | 0.9 |
| Mold contamination property (MD) | | A | A |
| Mechanical property | Tensile yield strength (MPa) | 62 | 62 |

**[Table 13]**

| | | Example 36 | Example 37 | Example 38 |
|---|---|---|---|---|
| (A) Polyacetal resin | | 100 | 100 | 100 |
| (B) Dihydrazone compound | B-2 | 0.1 | | |
| | B-3 | | 0.1 | |
| | B-4 | | | 0.1 |
| (E) Hydrazide compound | E-1 | 0.1 | 0.1 | 0.1 |
| | E-2 | | | |
| (C) Polyamide resin | C-1 | 0.3 | 0.3 | 0.3 |
| (D) Coloring agent | D-1 | 0.5 | 0.5 | 0.5 |
| | D-2 | 0.1 | 0.1 | 0.1 |
| Effect of suppressing formaldehyde | Generation amount of HCHO at 215°C (unit: µg/g-POM) | 1.7 | 1.0 | 0.8 |
| Mold contamination property (MD) | | A | A | A |
| Mechanical property | Tensile yield strength (MPa) | 62 | 62 | 62 |

**[Table 14]**

| | | Example 39 | Example 40 | Example 41 |
|---|---|---|---|---|
| (A) Polyacetal resin | | 100 | 100 | 100 |
| (B) Dihydrazone compound | B-2 | | | |
| | B-3 | 0.1 | 0.1 | 0.1 |
| | B-4 | | | |
| (E) Hydrazide compound | E-1 | | | |
| | E-2 | 0.01 | 0.5 | 1 |
| (C) Polyamide resin | C-1 | 0.3 | 0.3 | 0.3 |
| (D) Coloring agent | D-1 | 0.5 | 0.5 | 0.5 |
| | D-2 | 0.1 | 0.1 | 0.1 |
| Effect of suppressing formaldehyde | Generation amount of HCHO at 215°C (unit: µg/g-POM) | 0.9 | 0.6 | 0.5 |
| Mold contamination property (MD) | | A | A | A |
| Mechanical property | Tensile yield strength (MPa) | 62 | 62 | 62 |

As shown in Tables 1 to 14, it was found that Reference Examples 1 to 35 and Examples 36 to 41 all satisfy the pass criteria in terms of suppression of formaldehyde generation, suppression of mold contamination, and mechanical property. On the other hand, it was found that Comparative Examples 1 to 10 did not satisfy the pass criteria in terms of suppression of formaldehyde generation, suppression of mold contamination, or mechanical property.

Accordingly, it was confirmed that the polyacetal resin composition of the invention can, while being blended with a coloring agent, sufficiently suppress the generation of formaldehyde and sufficiently suppress the contamination of a mold at the time of molding process, and at the same time, can provide an excellent mechanical property to a molded article.

## Claims

1. A polyacetal resin composition comprising a dihydrazone compound (B), which is composed of at least one selected from the group consisting of a dihydrazone compound (B1) represented by the following general formula (1) and a dihydrazone compound (B2) represented by the following general formula (2), blended at a ratio of 0.02 to 5 parts by mass, a polyamide resin (C) blended at a ratio of 0.01 to 3 parts by mass, a coloring agent (D), which is composed of at least one selected from the group consisting of an inorganic coloring agent and an organic coloring agent, blended at a ratio of 0.01 to 5 parts by mass, and a hydrazide compound (E) blended at a ratio of 0.01 to 1 part by mass relative to 100 parts by mass of a polyacetal resin (A),
wherein the polyamide resin (C) is a polyamide resin which has at least one physical property of i) a physical property that the melting point or the softening point is not higher than 180°C and ii) a physical property that the amine value is not lower than 2 mgKOH/g, whereby these physical properties are determined in accordance with the methods specified in the description: 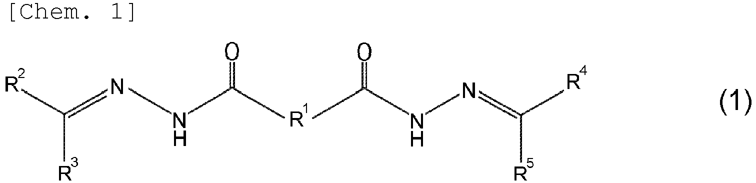 wherein
R¹ represents an aliphatic hydrocarbon group with carbon atom number of 4 to 19, R² to R⁵ each represent a methyl group; 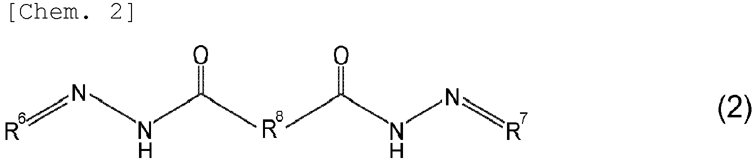 wherein
R⁸ represents an aliphatic hydrocarbon group with carbon atom number of 4 to 19, an alicyclic hydrocarbon group with carbon atom number of 6 to 10, or an aromatic hydrocarbon group with carbon atom number of 6 to 10, and
R⁶ and R⁷ each independently represent an alicyclic hydrocarbon group with carbon atom number of 3 to 12.

2. The polyacetal resin composition according to claim 1, wherein the polyamide resin (C) is a polyamide resin which has i) a physical property that the melting point or the softening point is not higher than 180°C.

3. The polyacetal resin composition according to claim 1 or 2, wherein the polyamide resin (C) is a polyamide resin which has both a physical property that the melting point or the softening point is not higher than 180°C and ii) a physical property that the amine value is not lower than 2 mgKOH/g.

4. The polyacetal resin composition according to any one of claims 1 to 3, wherein the polyamide resin (C) is composed of at least one selected from the group consisting of polyamide 12, polyamide 6/66 copolymer, polyamide 6/12 copolymer, polyamide 6/66/610 ternary copolymer, polyamide 6/66/610/12 quaternary copolymer, and a dimer acid polyamide resin.

5. The polyacetal resin composition according to claim 4, wherein the polyamide resin (C) is a dimer acid polyamide resin.

6. The polyacetal resin composition according to any one of claims 1 to 5, wherein R¹ in the general formula (1) is an aliphatic hydrocarbon group with carbon atom number of 6 to 12.

7. The polyacetal resin composition according to any one of claims 1 to 6, wherein the dihydrazone compound (B) is blended at a ratio of 0.05 to 3 parts by mass relative to 100 parts by mass of the polyacetal resin (A).

8. The polyacetal resin composition according to any one of claims 1 to 7, wherein the hydrazide compound (E) is a dihydrazide compound.

9. The polyacetal resin composition according to any one of claims 1 to 8, wherein the coloring agent (D) is composed of at least one selected from the group consisting of titanium yellow, titanium white, carbon black, perinone-based pigment, and phthalocyanine-based pigment.

10. A polyacetal resin molded article obtained by molding the polyacetal resin composition according to any one of claims 1 to 9.

## Patentansprüche

1. Polyacetalharzzusammensetzung, umfassend eine Dihydrazonverbindung (B), die aus mindestens einer, ausgewählt aus der Gruppe, bestehend aus einer durch die folgende Formel (1) dargestellten Dihydrazonverbindung (B1) und einer durch die folgende allgemeine Formel (2) dargestellten Dihydrazonverbindung (B2) zusammengesetzt ist, beigemengt zu einem Anteil von 0,02 bis 5 Masseteilen, ein Polyamidharz (C), beigemengt zu einem Anteil von 0,01 bis 3 Masseteilen, ein Färbemittel (D), das aus mindestens einem, ausgewählt aus der Gruppe, bestehend aus einem anorganischen Färbemittel und einem organischen Färbemittel, zusammengesetzt ist, beigemengt zu einem Anteil von 0,01 bis 5 Masseteilen, und eine Hydrazidverbindung (E), beigemengt bei einem Verhältnis von 0,01 bis 1 Masseteilen, relativ zu 100 Masseteilen eines Polyacetalharzes (A),
wobei das Polyamidharz (C) ein Polyamidharz ist, das mindestens eine physikalische Eigenschaft von i) einer physikalischen Eigenschaft, wonach der Schmelzpunkt oder der Erweichungspunkt nicht höher als 180°C ist, und ii) einer physikalischen Eigenschaft, wonach der Aminwert nicht niedriger als 2 mgKOH/g ist, wobei diese physikalischen Eigenschaften gemäß den in der Beschreibung spezifizierten Verfahren bestimmt werden: 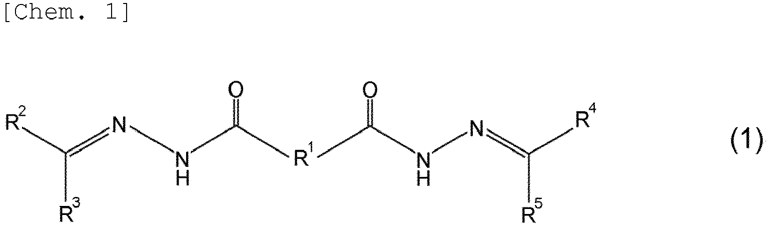 worin R¹ eine aliphatische Kohlenwasserstoffgruppe mit einer Kohlenstoffatomzahl von 4 bis 19 darstellt, R² bis R⁵ jeweils eine Methylgruppe darstellen, 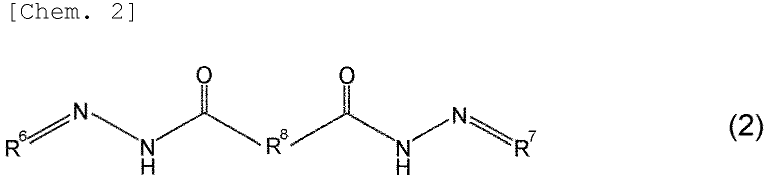 worin R⁸ eine aliphatische Kohlenwasserstoffgruppe mit einer Kohlenstoffatomzahl von 4 bis 19, eine alicyclische Kohlenwasserstoffgruppe mit einer Kohlenstoffatomzahl von 6 bis 10 oder eine aromatische Kohlenwasserstoffgruppe mit einer Kohlenstoffatomzahl von 6 bis 10 darstellt und R⁶ und R⁷ jeweils unabhängig eine alicyclische Kohlenwasserstoffgruppe mit einer Kohlenstoffatomzahl von 3 bis 12 darstellen.

2. Polyacetalharzzusammensetzung gemäß Anspruch 1, wobei das Polyamidharz (C) ein Polyamidharz ist, das i) eine physikalische Eigenschaft aufweist, wonach der Schmelzpunkt oder der Erweichungspunkt nicht höher als 180°C ist.

3. Polyacetalharzzusammensetzung gemäß Anspruch 1 oder 2, wobei das Polyamidharz (C) ein Polyamidharz ist, das sowohl eine physikalische Eigenschaft, wonach der Schmelzpunkt oder der Erweichungspunkt nicht höher als 180°C ist, als auch ii) eine physikalische Eigenschaft, wonach der Aminwert nicht niedriger als 2 mgKOH/g ist, aufweist.

4. Polyacetalharzzusammensetzung gemäß irgendeinem der Ansprüche 1 bis 3, wobei das Polyamidharz (C) aus mindestens einem, ausgewählt aus der Gruppe, bestehend aus Polyamid 12, Polyamid 6/66-Copolymer, Polyamid 6/12-Copolymer, ternärem Polyamid 6/66/610-Copolymer, quaternärem Polyamid 6/66/610/12-Copolymer und einem dimeren Säure-Polyamidharz, zusammengesetzt ist.

5. Polyacetalharzzusammensetzung gemäß Anspruch 4, wobei das Polyamidharz (C) ein dimeres Säure-Polyamidharz ist.

6. Polyacetalharzzusammensetzung gemäß irgendeinem der Ansprüche 1 bis 5, wobei R¹ in der allgemeinen Formel (1) eine aliphatische Kohlenwasserstoffgruppe mit einer Kohlenstoffatomzahl von 6 bis 12 ist.

7. Polyacetalharzzusammensetzung gemäß irgendeinem der Ansprüche 1 bis 6, wobei die Dihydrazonverbindung (B) zu einem Anteil von 0,05 bis 3 Masseteilen, relativ zu 100 Masseteilen des Polyacetalharzes (A), beigemengt ist.

8. Polyacetalharzzusammensetzung gemäß irgendeinem der Ansprüche 1 bis 7, wobei die Hydrazidverbindung (E) eine Dihydrazidverbindung ist.

9. Polyacetalharzzusammensetzung gemäß irgendeinem der Ansprüche 1 bis 8, wobei das Färbemittel (D) aus mindestens einem, ausgewählt aus der Gruppe, bestehend aus Titangelb, Titanweiß, Ruß, Pigment auf Perinonbasis und Pigment auf Phthalocyaninbasis, zusammengesetzt ist.

10. Polyacetalharzformartikel, erhalten durch Formen der Polyacetalharzzusammensetzung gemäß irgendeinem der Ansprüche 1 bis 9.

## Revendications

1. Composition de résine polyacétalique comprenant un composé dihydrazone (B), qui est composé d'au moins un composé choisi dans le groupe constitué d'un composé dihydrazone (B1) représenté par la formule générale suivante (1) et d'un composé dihydrazone (B2) représenté par la formule générale suivante (2), mélangé à un rapport de 0,02 à 5 parties en masse, d'une résine de polyamide (C) mélangée à un rapport de 0,01 à 3 parties en masse, d'un agent colorant (D), qui est composé d'au moins un élément choisi dans le groupe constitué d'un agent colorant inorganique et d'un agent colorant organique, mélangé à un rapport de 0,01 à 5 parties en masse, et d'un composé hydrazide (E) mélangé à un rapport de 0,01 à 1 partie en masse par rapport à 100 parties en masse d'une résine polyacétalique (A),
dans laquelle la résine de polyamide (C) est une résine de polyamide présentant au moins une propriété physique choisie parmi i) une propriété physique selon laquelle le point de fusion ou le point de ramollissement n'est pas supérieur à 180 °C et ii) une propriété physique selon laquelle la valeur d'amine n'est pas inférieure à 2 mg de KOH/g, sachant que ces propriétés physiques sont déterminées conformément aux procédés spécifiés dans la description : 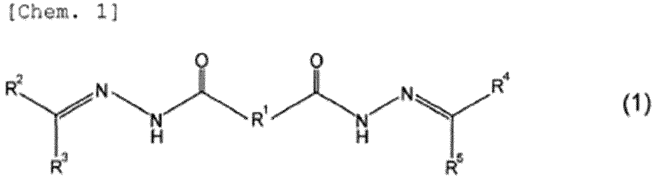 dans laquelle R¹ représente un groupe hydrocarboné aliphatique avec un nombre d'atomes de carbone de 4 à 19, R² à R⁵ représentant chacun un groupe méthyle ; 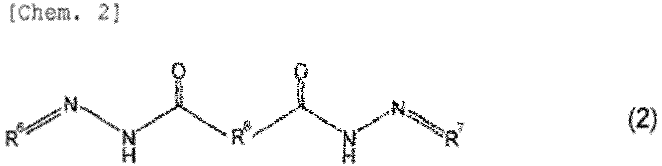
dans laquelle R⁸ représente un groupe hydrocarboné aliphatique avec un nombre d'atomes de carbone de 4 à 19, un groupe hydrocarboné alicyclique avec un nombre d'atomes de carbone de 6 à 10, ou un groupe hydrocarboné aromatique avec un nombre d'atomes de carbone de 6 à 10, et
R⁶ et R⁷ représentent chacun indépendamment un groupe hydrocarboné alicyclique avec un nombre d'atomes de carbone de 3 à 12.

2. Composition de résine polyacétalique selon la revendication 1, dans laquelle la résine de polyamide (C) est une résine de polyamide qui présente i) une propriété physique selon laquelle le point de fusion ou le point de ramollissement n'est pas supérieur à 180 °C.

3. Composition de résine polyacétalique selon la revendication 1 ou 2, dans laquelle la résine de polyamide (C) est une résine de polyamide qui présente à la fois une propriété physique selon laquelle le point de fusion ou le point de ramollissement n'est pas supérieur à 180 °C et ii) une propriété physique selon laquelle la valeur d'amine n'est pas inférieure à 2 mg de KOH/g.

4. Composition de résine polyacétalique selon l'une quelconque des revendications 1 à 3, dans laquelle la résine de polyamide (C) est composée d'au moins un élément choisi dans le groupe constitué du polyamide 12, du copolymère de polyamide 6/66, du copolymère de polyamide 6/12, du copolymère ternaire de polyamide 6/66/610, du copolymère quaternaire de polyamide 6/66/610/12, et d'une résine de polyamide d'acide dimère.

5. Composition de résine polyacétalique selon la revendication 4, dans laquelle la résine polyamide (C) est une résine de polyamide d'acide dimère.

6. Composition de résine polyacétalique selon l'une quelconque des revendications 1 à 5, dans laquelle R¹ dans la formule générale (1) est un groupe hydrocarboné aliphatique avec un nombre d'atomes de carbone de 6 à 12.

7. Composition de résine polyacétalique selon l'une quelconque des revendications 1 à 6, dans laquelle le composé dihydrazone (B) est mélangé à un rapport de 0,05 à 3 parties en masse par rapport à 100 parties en masse de la résine polyacétalique (A).

8. Composition de résine polyacétalique selon l'une quelconque des revendications 1 à 7, dans laquelle le composé hydrazide (E) est un composé dihydrazide.

9. Composition de résine polyacétalique selon l'une quelconque des revendications 1 à 8, dans laquelle l'agent colorant (D) est composé d'au moins un élément choisi dans le groupe constitué de jaune de titane, blanc de titane, noir de carbone, pigment à base de périnone et de pigment à base de phtalocyanine.

10. Article moulé en résine polyacétalique obtenu par moulage de la composition de résine polyacétalique selon l'une quelconque des revendications 1 à 9.
